# EUROPEAN PATENT SPECIFICATION

(11) **EP 3 441 360 B1**
(45) Date of publication and mention of the grant of the patent: **29.07.2020**
(21) Application number: 17382564.7
(22) Date of filing: 10.08.2017
(51) Int. Cl.: C01B 3/32, C01B 3/50

(54) **SYSTEM FOR ALCOHOL REFORMING AND HYDROGEN PRODUCTION, UNITS OF THE SYSTEM AND METHOD THEREOF**
SYSTEM ZUM UMFORMEN VON ALKOHOL UND ZUR WASSERSTOFFHERSTELLUNG, EINHEITEN DES SYSTEMS UND VERFAHREN DAFÜR
SYSTÈME DE REFORMAGE D'ALCOOLS ET DE LA PRODUCTION D'HYDROGÈNE, DES UNITÉS DE SYSTÈME ET PROCÉDÉ ASSOCIÉ

(43) Date of publication of application: 13.02.2019
(73) Proprietor: Sener Ingenieria Y Sistemas, S.A., 48930 Las Arenas - Guecho, Vizcaya (ES)
(72) Inventor: LLABRÉS VEGUILLAS, Javier, 28224 MADRID (ES); LOPEZ MOÑUX, Unai, 28050 MADRID (ES); ESPADA GONZÁLEZ, Ana, 28005 MADRID (ES)
(74) Representative: Carvajal y Urquijo, Isabel

(56) References cited:
- EP-A1- 1 995 212
- EP-A2- 2 525 146
- WO-A2-2011/148068
- WO-A2-2015/018962
- US-A1- 2007 122 667
- US-A1- 2008 141 675

## Description

### FIELD OF THE INVENTION

The field of the invention relates to systems for alcohol reforming and hydrogen production, which produces hydrogen from an alcohol, suitable for a submarine. Specifically, the invention relates to auto-thermal reforming units and boiler units.

### BACKGROUND ART

Most of the non-nuclear submarines use a Diesel generator as propulsion method. The produced energy is stored in batteries and these batteries move the motor of the propeller. In order to burn the diesel fuel, air is required. Air is taken from the atmosphere, so the submarine must be operated in snorkeling maneuver and could not be submerged deeply. These submarines have a certain submerged endurance, stopping the diesel generator, based on the bateries capacity of maximum a few days until they are depleted.

Air Independent Propulsion (AIP) submarines use other propulsion methods that do not require the presence of air. Consequently, they can stay submerged and non-detectable (silent) for much more time. One of these methods uses a Fuel Cell (FC) in order to generate the required energy from Hydrogen.

Even though this method is satisfactorily used nowadays, hydrogen storage is an important factor to be considered. Hydrogen may be stored in hydride form with metals, contained in big storage cylinders. These storage cylinders are heavy and big; therefore, a submarine can only contain a limited number of thee storage cylinders. The use of hydrogen storage implies a limitation of the submerged endurance.

The problem of hydrogen storage can be solved by generating the hydrogen on board. An alcohol reformer can be used in order to produce the required hydrogen flow rate for the Fuel Cell. The produced hydrogen must be of a very high purity (at least 99.999%). This is a requirement for a fuel cell that works in closed anode.

In addition, very little noise must be produced in the reforming process (essential requirement in a submarine) and must consume as few energy as possible so that the greatest amount of power produced by the stack (net power) is used in the propeller motion (very high efficiency with small auto-consumptions). The space occupied and the weight of such a system are of vital importance in a submarine.

Different systems and methods for alcohol reforming have been disclosed in the prior art.

EP2641866A1 shows an ethanol reforming system that works on open anode. The fuel cell is therefore integrated in the process and the stream supplied to the anode must contain a very low amount of CO (of the order of 20 ppm) to avoid its poisoning. It is a process carried out at low pressure (near the atmospheric).

The ethanol/water vaporized mixture is supplied to a pre-reforming reactor in which methane is preferably obtained. Downstream, two isothermal reforming reactors are arranged in parallel, where the reforming reaction of said methane is carried out. The heat necessary to perform this reaction is supplied by heat exchange by the combustion reaction of the rejection gases of the anode in the combustor.

In order to remove CO from the methane reforming process, the reforming gas is purified. This purification is achieved by performing two Water Gas Shift processes at different temperatures with two reactors in series, three COPROX (CO PReferential OXidation) processes through three reactors also arranged in series and a final process of methanation in a reactor.

The Fuel Cell has an open anode, so that the hydrogen is partially used. The anode reject stream has a large amount of hydrogen as well as a certain amount of methane.

The rejection gas is conducted to the two-stage Combustor, where it is burned in the presence of oxygen. These combustors are associated to the reforming reactors, supplying heat from the combustion to the reforming process.

EP2525146 shows a method and a device for burning a fuel, preferably methanol, in the presence of oxygen in a submarine.

EP2525146 discloses that a methanol reformer is used to produce the hydrogen required by the fuel cell. This reformer requires heat to carry out the process. The heat supply to the methanol reformer is carried out by means of a boiler.

EP2525146 discloses a method and a device that performs the catalytic combustion of fuel in the presence of oxygen in several steps. A multi-stage catalytic boiler that replaces the previous flame boiler technology is disclosed. The boiler solves problems such as the control of the oxygen dosage and the high temperatures.

The document does not disclose how to perform oxygen and fuel mixing to reduce the risk of flame auto-ignition. EP2525146 does not mention the problem of auto-ignition, typical of these type of reactors and combustors and does not provide solution to this problem.

In the first reaction step, part of the fuel is burned and the remainder is converted into hydrogen and CO. The hydrogen and CO generated are subsequently burned in several steps of catalytic combustion. In all the steps arranged in series, the oxygen is appropriately dosed to proceed to the oxidation of combustible gases that pass from one step to another. Oxygen is introduced in a sub-stoichiometric manner for avoiding burning of all the combustible gases, so they can still be used in the following steps. Oxygen is dosed, at least, in stoichiometric quantity in the last step to proceed to the complete combustion of all the remaining gases. Between two catalytic steps, hot gases are cooled by supplying the necessary heat to the methanol reformer.

US2007122667A1 refers to a boat propulsion system based on the production of hydrogen supplied to a fuel cell where electrical energy is generated. The system consists of: an auto-thermal reforming unit of a fuel (ethanol, biodiesel or mixtures thereof); a Water Gas Shift (WGS) reaction unit with a catalytic zone in which the carbon monoxide reacts with water and generates hydrogen and carbon dioxide; a hydrogen separation unit where a hydrogen stream is obtained with the required purity to feed a fuel cell; and finally a catalytic combustor where the reject stream of the Hydrogen separation unit is burned. In addition, the integration into one single device of the hydrogen separation unit, the Water Gas Shift unit and the palladium membranes embedded in the catalytic zone of the reactor is included as an option. The oxygen used in the process comes from an air compressor. A membrane separator is included to separate oxygen from the air. It is proposed to use the oxygen separator or not depending on the purity of the required hydrogen. The hydrogen is obtained by separation in Pd membranes supported in a porous medium. Actually, the nitrogen of the air dilutes the reactive mixture, reducing the partial pressure of hydrogen in the separation with Pd membranes process. It does not influence the purity of the hydrogen obtained but rather requires more transfer area and reduce the efficiency of the production (less hydrogen yield).

EP1808327A1 discloses a system to produce electric energy for vehicle propulsion comprising an auto-thermal ethanol reforming unit, a hydrogen purification unit by selective palladium membranes, and a fuel cell, where electrical energy is generated, that operates at low pressure (indicated about 0.3 barg). The residue from the separation cell is burnt in the combustor to recover the heat by preheating the inlet ethanol / water mixture.

WO2011148066A2 discloses a fuel reforming process for the production of hydrogen, as well as the installation to produce it to be used in vehicles, especially in confined air systems (i.e. submarines), with the following units: A. An auto-thermal reforming unit fed with fuel, pure oxygen and steam where a hydrogen-rich stream is obtained; B. A Water Gas Shift (WGS) reaction unit where carbon monoxide reacts with water in the form of steam and hydrogen and carbon dioxide are obtained; C. A hydrogen purification unit by hydrogen selective metal membranes (i.e. palladium membranes); D. A fuel cell where electrical energy is produced and it is fed with oxygen and the pure hydrogen stream obtained as a permeate from the purification unit; and E. A catalytic combustion unit which is fed with the rejection stream of the membrane purification unit, where the obtained flue gases are used to heat the reactant streams.

Although WO2011148066 focuses on diesel as feedstock, it cites the possible use of other fuels such as methanol or ethanol. Operating conditions during the reforming step are between 700-1000 ° C of temperature and high pressure 40-70 bar (higher than the maximum used in the present invention of 40 barg).

WO0125140A1 discloses a fuel cell electric generation system specially designed for submarine propulsion, which has an auto-thermal fuel reforming unit (preferably diesel), a Water Gas Shift reaction unit where the Carbon monoxide present in the reforming stream reacts with steam to form hydrogen and carbon dioxide, a palladium membrane separator where the stream from the WGS reactor is divided into a hydrogen-rich stream and a rejection stream, a fuel cell where electrical energy is produced from the hydrogen-rich stream and an oxidizing stream, and a catalytic combustor where the refining stream is burned. This document indicates the desirability of working at pressures higher than the diving depth pressure to favour the discharge of residual streams.

US 2004/0175665 discloses a device which attempts to mix the oxidizing gas and the fuel in such a way as to avoid self-ignition of the mixture. To do this, many small tubes are used, through which the reactants enter separately to mix them with little residence time until arriving at the catalyst.

US 2005/0066577A1 discloses a system for producing synthesis gas with an oxidant, steam and a light hydrocarbon mixed in the feed. Details of method of mixing of the reactants are not described, however, an embodiment is described where the temperatures of the reactants are specified.

An apparatus for mixing an oxygen-containing gas and a fuel gas into the mixing volume of a reformer is disclosed in US3871838. This patent describes a mixing system where the oxidizing gas is introduced through a perforated tube distributor. These tubes have a longitudinal extension so their diameter is reduced to increase the gas passage area.

US4865820 discloses a distributor and mixer of a reactor with two zones. Various passages are provided to introduce gas from one zone to the other. Small passages are designed to favor high speeds and high turbulence, to mix both gases suitably. The gas crosses from the passages (tubes) to the second zone through small holes.

WO 2006/065766 A2 discloses an apparatus that mixes steam, a light hydrocarbon and an oxygen containing gas is described. The described device uses concentric tubes where each gas is introduced separately. These tubes have apertures in the form of holes through which the various gases are mixed.

In WO2011148068A2 discloses a unit for carrying out the auto-thermal reforming of a hydrocarbon stream (mainly diesel, but also methanol, ethanol, bioethanol among others) consisting of a fixed bed reactor (100) arranged in an inner cylindrical tank (102) surrounded by an outer shell (101). The hydrocarbon stream enters the reactor through a coaxial conduit (104) having a nozzle (105) that allows atomizing the stream in the form of small droplets; the steam stream is introduced tangentially through the inlet (110), both discharge into a mixing chamber (106) in the form of a divergent duct (108) increasing the diameter of the inner cylindrical tank (102), at the end of which a filler (111) is provided which favors the homogeneous distribution of the reactants over the entire reactor section and downstream a set of Venturi type injectors (112) in which the reactants are mixed with oxygen. The mixture of the three reactants is conducted through a series of catalytic beds (117,119) and finally the reformed stream flows through a filter (121) and leaves the reactor through the nozzle (126). The inner cylindrical tank (102) is cooled by tubes with water which allow the temperature of the gases to be lowered to 500 ° C at the end. This cooling causes the outer shell (101) not to work at high temperature. The outer wall (101) is fabricated from a material that allows large pressure differences and intermediate temperatures and the inner wall (102) is manufactured from a high temperature resistant material. The space between the two envelopes is occupied by an inert gas at a pressure similar to the reaction one (between 40 and 70 bar) and lower temperatures (between 100 ° C and 300 ° C). The auto-thermal reforming reaction is carried out at high pressures (40-70 bar), with a hydrocarbon feed at a temperature of 200-300 ° C, a steam feed at 400-600 ° C and the oxidizer one at 250-300 ° C.

WO2015198186A1 discloses an auto-thermal reforming reactor for the production of a hydrogen-rich stream from hydrocarbons, consisting of a cylindrical reservoir in which the catalytic bed (5) is disposed, a nozzle for the hydrocarbon and steam inlet (2), a nozzle for the air inlet (3), a mixer (4) and a feed chamber (7) with divergent geometry situated between the mixer and the catalytic bed, wherein the reactor is surrounded by insulation layers. It also has an integrated electric heater to heat the reactants from 150°C to 450°C at the beginning of the start-up process and thus favour the combustion of methane. The inlet temperature of the reagents is 150°C at the beginning and 450°C when it is started.

US2008011250A1 collects a mixing chamber for a reformer to produce a hydrogen rich stream from hydrocarbons supplied in liquid form, consisting of a first chamber where the fuel is atomized by a nozzle, mixed and vaporized with a stream of steam. The mixture is fed to a second chamber via a conduit in which the oxidant is dosed. The temperature of the first fuel evaporator chamber is around 400 ° C.

US20020088179A1 and US6620389B1 disclose similar systems. In both documents, a distributor and mixer located at the top of a reactor are disclosed. The reactants are supplied vaporized by heat exchange with the reaction zone by helical tubes. There is a fuel manifold in which fuel or fuel with steam is introduced. This manifold communicates with the catalyst below by tubes that channel the fuel. These tubes have two rows of holes that can have a certain angle of entry. Through these holes the oxidant or oxidant with steam is dosed. In the tube the reagents are mixed and conducted downwards to the catalytic bed.

US 2008/0141675 A1 discloses a hybrid combustor, as an anode tail gas oxidizer, for fuel processing applications, which combines both flame and catalytic type burners. The flame burner type is used during start up for preheating the catalyst. When the catalyst is warm enough the flame burner is switched off and the catalytic burner is used instead. The hybrid combustor may also include an integrated heat recovery unit. In the patent it is also described the fuel gas processor with its units.

### SUMMARY OF INVENTION

In a first aspect, the present invention provides a system for alcohol reforming and hydrogen production suitable for a submarine, comprising (a) an alcohol auto-thermal reforming unit (1) for alcohol auto-thermal reforming and hydrogen production, and (b) a boiler unit for combustion of hydrogen and combustible gases, wherein
- the auto-thermal reforming unit (1) is an adiabatic fixed bed reactor arranged in a cylindrical envelope (27) surrounded by an outer shell (26) of metal alloy, the reactor comprising a catalytic bed (28), an alcohol and steam inlet (25), an oxygen inlet (36), a non return valve (37) arranged in the oxygen inlet (36), a divergent nozzle (32) with increasing size up to the diameter of the cylindrical envelope (27), wherein the auto-thermal reforming unit (1) comprises a Venturi type mixing element (33) and a distributor ring (41) which doses the oxygen in the Venturi type mixing element (33) or a lance (39) creating a Venturi throat (33) and
- the boiler unit (3) is an adiabatic fixed bed reactor arranged in a cylindrical envelope (44) surrounded by an outer shell (43) of metal alloy, the reactor comprising a catalytic bed (50), a hydrogen and combustible gases inlet (42), an oxygen inlet (54), a first divergent nozzle (47) with increasing size up to the diameter of the cylindrical envelope (44), wherein the boiler unit (3) comprises a first Venturi type mixing element (51) and a distributor ring (49) which doses the oxygen in the first Venturi type mixing element (51) or a lance (63) which creates a Venturi throat (51), a second Venturi element (56), a second divergent nozzle (58), a water inlet (62) and a water injection lance (59),
and comprising palladium membranes, wherein the palladium membranes are integrated in the auto-thermal reforming unit (1) or positioned between the auto-thermal reforming unit (1) and the boiler unit (3)

A further embodiment is the system of the first aspect, wherein the metal alloy is a nickel alloy.

A further embodiment is the system of the first aspect, wherein the alcohol is methanol or ethanol. The alcohol may be a heavier alcohol too.

A further embodiment is the system of the first aspect, wherein the combustible gases are methane and/or CO.

The main process takes place in the auto-thermal reforming unit (1) which corresponds to an auto-thermal reforming of the fuel and, therefore, most of the hydrogen production.
The unrecovered hydrogen traces as well as other generated combustible gases (methane, CO) are burned in the boiler unit (3) in order to increase the energetic efficiency of the system and avoid sending gases of difficult evacuation to the CO₂ dissolution unit.

In the system of the first aspect of the invention, the catalysts of the catalytic bed (28) and (50) may be of the random type (in particles of all shapes and sizes), structured, monolithic or layered.

The system according to the first aspect of the invention generates the required hydrogen with a purity suitable for feeding a fuel cell.

Optionally, the system according to the first aspect of the invention comprises a Water Gas Shift unit (2) integrated with separation units comprising palladium membranes. With this option, hydrogen generation yield is increased by the Water Gas Shift reaction, and recovery from the reforming gas is carried out.

Optionally, the system according to the first aspect of the invention comprises a Water Gas Shift unit (2) and a separation unit, which is not integrated with the Water Gas Shift unit (2). The Water Gas Shift unit (2) consists of:
(3a) a first Water Gas Shift reactor (64);
(3b) a first hydrogen separation unit with palladium membranes (membrane unit only) (65);
(3c) a second Water Gas Shift reactor (66);
(3d) a second hydrogen separation unit with palladium membranes (67).

Optionally, in the system according to the first aspect of the invention, the auto-thermal reaction unit (1) integrates palladium membranes into the concentric ring, which operates at a lower temperature. This optional system does not comprise Water Gas Shift units (2) and does not comprise separation units. The process of alcohol reforming and hydrogen separation would be carried out in a single step.

Optionally, in the system according to the first aspect of the invention, the auto-thermal reaction unit (1) integrates a second water mixing Venturi (56) at the outlet of the inner envelope (27) integrating the technology described in the boiler (3). In this optional system, the outlet temperature of the inner tube (27) can be reduced to 450/500 °C making the integration of palladium membranes in the concentric ring more suitable (600 °C is a high temperature for the current state of the art in Pd membranes technology). In addition the Water Gas Shift reaction in the concentric ring is favored by the lower operating temperature (which can accommodate a mixture of catalysts suitable for the ethanol steam reforming and Water Gas Shift reactions), in such a way that downstream Water Gas Shift unit (2) and separation units are not required. The process of reforming the alcohol, Water Gas Shift and separation of hydrogen would be carried out in a single step.

Optionally, in the system according to the first aspect of the invention, the auto-thermal reaction unit (1) integrates a second mixing Venturi (56) at the outlet of the inner envelope (27) integrating the technology described in the boiler (3). In this optional system, a second oxygen inlet will be introduced in the second mixing element (56) instead of water. In this optional system, all the oxygen is not introduced in one single point, distributing the temperature peaks. In this optional method, the temperature peak obtained by catalytic combustion in the first centimeters of the bed can be therefore reduced.

In a second aspect, the present invention provides an auto-thermal reforming unit (1) for alcohol reforming and hydrogen production suitable for a submarine, wherein the unit is an adiabatic fixed bed reactor arranged in a cylindrical envelope (27) surrounded by an outer shell (26) of metal alloy, the reactor comprising a catalytic bed (28), an alcohol and steam inlet (25), an oxygen inlet (36), a non return valve (37) arranged in the oxygen inlet (36), a divergent nozzle (32) with increasing size up to the diameter of the cylindrical envelope (27), wherein the auto-thermal reforming unit (1) comprises a Venturi type mixing element (33) and a distributor ring (41) which doses the oxygen in the Venturi type mixing element (33) or a lance (39) creating a Venturi throat (33).

A further embodiment is the auto-thermal reforming unit (1) of the second aspect, wherein the unit comprises a drilled distributor plate (31) and a ceramic material (40).

A further embodiment is the auto-thermal reforming unit (1) of the second aspect, wherein the unit comprises a product outlet (34) and a mesh (35).

A further embodiment is the auto-thermal reforming unit (1) of the second aspect, wherein the unit comprises palladium membranes.

A further embodiment is the auto-thermal reforming unit (1) of the second aspect, wherein the unit comprises temperature sensors (30).

A further embodiment is the auto-thermal reforming unit (1) of the second aspect, wherein the unit comprises a non-return valve (37) arranged in the oxygen inlet (36).

The processes taking place in the auto-thermal reforming unit (1) are described in detail below.

### Auto-thermal reforming unit (1)

In the auto-thermal reaction unit (1) the heat required to maintain optimum conditions for the reforming reaction is generated by the partial oxidation and combustion of the fuel.

Ethanol steam reforming (as well as methanol) is a moderately endothermic, energy-absorbing reaction, where the products have higher energy than the reactants. This heat input must be constantly supplied since otherwise the reforming reaction would stop. The required heat is supplied in the reactor itself by the partial oxidation and combustion of the fuel. These reactions, unlike the previous one, are very exothermic, they release heat. Exothermic and endothermic reactions take place on the same equipment and on the same catalyst.

It is called partial oxidation because not all the alcohol is oxidized, otherwise the reforming reaction could not take place. In addition the fact of burning or oxidizing with oxygen in default (sub-stoichiometric) causes the generation of hydrogen. More or less fuel will be consumed in the oxidation reaction depending on the oxygen quantity supplied. Thus, by controlling the amount of oxygen entering the reactor, the temperature in the reactor will be controlled.

In this unit, other chemical reactions can take place, as it is the decomposition of the alcohol. This reaction is undesirable for the process as it generates methane in the case of ethanol and CO in the case of methanol. Methane generation should be avoided as much as possible as this gas is difficult to convert. The catalyst used shall be very poorly selective towards methane.

In order to achieve that the reactions that take place in the auto-thermal reforming unit (1), a catalyst desirable for the process is chosen. Thus, depending on the catalyst selection (precious metal, Nickel based, Cobalt based), the proportion of each reaction development is different.

The main reactions that take place in the unit in case of processing ethanol are listed below:

| | | |
|---|---|---|
| *CH₃CH*₂*OH* + *O₂* → *CO₂* + 3*H₂* + *CO* | Partial oxidation of ethanol | High exothermic reaction |
| *CH₃CH*₂*OH* + 3O*₂* → 2*CO₂* + 3*H₂O* | Ethanol combustion | Very high exothermic reaction |
| *CH*₃*CH*₂*OH* + 3*H*₂*O* → 2*CO*₂ + 6*H*₂ | Ethanol steam reforming | Moderate endothermic reaction |
| *CH*₃*CH*₂*OH* → *CH*₄ + *CO* + *H*₂ | Ethanol decomposition (through acetaldehyde dehydrogenation and decomposition) | Light endothermic reaction |
| 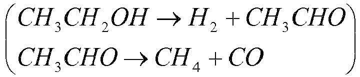 | | |
| *CO* + *H*₂*O* → *CO*₂ + *H*₂ | Water Gas Shift | Moderate exothermic reaction |
| *CH*₄ + *H*₂*O* → *CO* + 3*H*₂ | Methane steam reforming | Moderate endothermic reaction |

In the case of the methane steam reforming reaction, depending on the operating conditions and concentrations of components, the reverse reaction, called the methanation reaction, can take place. This reaction is undesired as it consumes hydrogen to generate methane.

In addition, the ethanol decomposition could produce more methane through acetaldehyde decomposition or the acetaldehyde could be reformed with steam (reducing the methane production).

The main reactions that take place in the auto-thermal reforming unit (1) in case of processing methanol are listed below:

| | | |
|---|---|---|
| 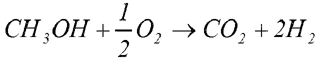 | Methanol partial oxidation | High exothermic reaction |
| 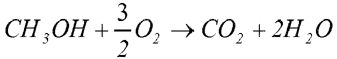 | Methanol combustion | Very high exothermic reaction |
| *CH*₃*OH* + *H*₂*O* → *CO*₂ + 3*H*₂ | Methanol steam reforming | Moderate endothermic reaction |
| *CH*₃*OH* → *CO* + 2*H*₂ | Methanol decomposition | Moderate endothermic reaction |
| *CO* + *H*₂*O* → *CO*₂ + *H*₂ | Water Gas Shift | Moderate exothermic reaction |

In the interior of the auto-thermal refoming unit (1), in the first centimeters of catalytic bed the temperature will be higher, since the partial oxidation and the combustion of the alcohol are faster reactions and are exothermic. For this reason, the temperature in these first centimeters can reach 750°C/950°C (depending on the extent of partial oxidation or combustion reactions) in case of ethanol and 475°C/550°C in case of methanol. The outlet temperature of the bed however is approximately 550°C/750°C (depending on catalyst and main reaction extent) for ethanol and about 300°C for methanol. The outlet temperature is much lower since it has been time enough for the endothermic reforming reactions to take place, since they are slower, along the bed, and not only in the first centimeters. There is therefore a longitudinal temperature profile in an adiabatic type reactor, reaching the maximum value at the beginning and decreasing rapidly at first and slowly thereafter as the flow progresses along the catalytic bed. This is why a very specific reactor construction material is required to withstand these high temperature conditions together with high pressure.

In a third aspect, the present invention provides a boiler unit (3) for alcohol reforming and hydrogen production suitable for a submarine, wherein the unit is an adiabatic fixed bed reactor arranged in a cylindrical envelope (44) surrounded by an outer shell (43) of metal alloy, the reactor comprising a catalytic bed (50), a hydrogen and combustible gases inlet (42), an oxygen inlet (54), a first divergent nozzle (47) with increasing size up to the diameter of the cylindrical envelope (44), wherein the boiler unit (3) comprises a first Venturi type mixing element (51) and a distributor ring (49) which doses the oxygen in the first Venturi type mixing element (51) or a lance (63) which creates a Venturi throat (51), a second Venturi element (56), a second divergent nozzle (58), a water inlet (62) and a water injection lance (59).

A further embodiment is the boiler unit (3) of the third aspect, wherein the unit comprises a drilled distributor plate (46) and a ceramic material (40).

A further embodiment is the boiler unit (3) of the third aspect, wherein the unit comprises a product outlet.

A further embodiment is the boiler unit (3) of the third aspect, wherein the unit comprises deflector plates (60) arranged inside the second divergent nozzle (58).

A further embodiment is the boiler unit (3) of the third aspect, wherein the unit comprises a non-return valve (53) arranged in the oxygen inlet (54).

A further embodiment is the boiler unit (3) of the third aspect, wherein the unit comprises temperature sensors (45).

The processes taking place in the boiler unit (3) are described in detail below.

### Boiler unit (3)

The boiler unit (3) has two main functions:
- Eliminate the content of combustible gases
- Increase the energetic efficiency of the process

Palladium membranes are capable of separating hydrogen as long as there is some driving force. The driving force is proportional to the difference of the quadratic roots of the hydrogen partial pressure between on one side and the other of the membrane. The pressure of the permeate hydrogen at the outlet thereof should be approximately 2 barg to meet the acceptance requirements of the fuel cell. That is why there will always be a certain amount of hydrogen in the reject gas (the equivalent to 2 barg) that cannot be filtered through the membranes. This amount of hydrogen is the one that reaches the boiler.

In addition, there are other gases that are produced in the previous stages of the process, such as methane and CO, which must be also burned to avoid its evacuation to the CO₂ dissolution unit, where they will be difficult to dissolve. In order to burn these gases it is necessary to incorporate oxygen. It will be also necessary to add a certain amount of water to control the temperature of the reactor.

The oxidation reactions of the boiler (3) are significantly exothermic.

These reactions are listed below:

| | | |
|---|---|---|
| 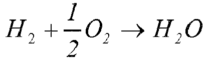 | Hydrogen combustion | Very exothermic reaction |
| 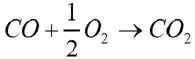 | CO combustion | Light exothermic reaction |
| *CH*₄ + 2*O*₂ → 2*H*₂*O* + *CO*₂ | CH4 combustion | Very exothermic combustion |

It is very convenient to use generated heat to increase the energetic efficiency of the system. Thus, the exhaust gases from the boiler, composed essentially of CO₂ and water, are circulated by several exchangers (7) and (14) (taking advantage of their heat) before being evacuated to the sea by means of the CO₂ dissolution unit. In order to control the temperature properly, there is an injection of water at the entrance of the unit and another inside it.

Little oxygen excess must be always controlled in order to guarantee the total oxidation of the combustible gases. This oxygen content is measured at the outlet of the boiler unit (3) or at the exhaust gases outlet.

In a fourth aspect, the present invention provides a method for alcohol reforming and hydrogen production in a submarine, comprising an alcohol reforming and hydrogen production step in a system of the first aspect of the invention, wherein the pressure at the auto-thermal reforming unit (1) is from 30 to 40 barg and wherein the following steps are carried out in the auto-thermal reforming unit (1):
(a) alcohol is introduced through an alcohol and steam inlet (25) at a temperature from 300°C to 350°C and
(b) oxygen is introduced through an oxygen inlet (36) at a temperature of 5 to 15°C.

A further embodiment is the method of the fourth aspect, wherein the following steps are carried out in the boiler unit (3):
(c) hydrogen and combustible gases are introduced through a hydrogen and combustible gases inlet (42) at a temperature of 180 to 220°C and
(d) oxygen is introduced through an oxygen inlet (54) at a temperature of 5 to 15°C.

### Method for alcohol reforming and hydrogen production in a submarine

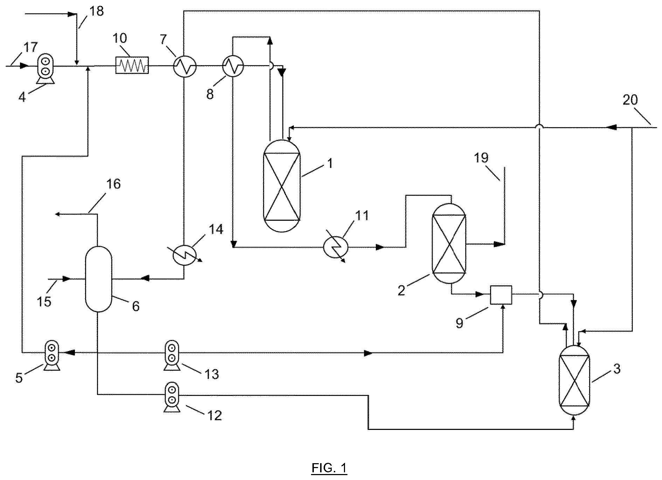

A description of this method is provided. Figure 1 depicts the method.

A pump (4) impulses high-pressure alcohol from an alcohol inlet line (17) which is mixed with an amount of water (the ratio between the relative amounts of alcohol and water is controlled in every moment). This ratio varies with the fuel and the operating condition (starting or steady state). The water is supplied by a water pump (5) from a water separation vessel (6).

The alcohol/water reactive mixture flows through a series of heat exchangers (7) and (8) to achieve the evaporation of the fluid. A certain controlled amount of oxygen is added to this alcohol and water mixture. Oxygen is taken from an oxygen inlet pipe (20). In order to achieve a composition as homogeneous as possible, mixing is carried out in a mixing element located inside the auto-thermal reaction unit (1).

The oxygen flow rate will vary and will be controlled as a function of the temperatures measured in the auto-thermal reforming unit (1).

In order to achieve the heating and evaporation of the alcohol/water liquid, the heat is supplied by the exhaust gases from the boiler unit (3) and by the product gas from the outlet of the auto-thermal reforming unit (1), optimizing the energy efficiency of the system. In order to allow the cold start of the system, if exhaust gases are not present, to initially provide heat, an electric heater (10) is included.

The electric heater (10) is used to heat an amount of CO₂ in the first moments of the starting sequence, taken from a CO₂ inlet pipe (18). Such warm CO₂ is circulated through the different equipment until enough temperature is reached to make active the different catalysts.

In the auto-thermal reforming unit (1), once the catalyst is activated and the catalytic combustion process (partial oxidation) is ignited, two types of reactions mainly occur. First type is an exothermic reaction, such as the partial oxidation and combustion of the alcohol, which increase the temperature and provides sufficient heat to maintain the endothermic reactions. Second type is an endothermic reaction, reforming the alcohol, whose reaction product, among others, is the desired hydrogen.

The outlet gases of said unit (1) are first conducted to the heat exchanger (8) to supply part of its heat to the inlet alcohol/water mixture and subsequently to other heat exchanger (11) before entering the second stage of the process, the Water Gas Shift unit (2) and separation units with palladium membranes. This last heat exchange is carried out by cooling water. It is necessary to cool and control the temperature of these gases, since the membranes of palladium should not be operating with very high temperatures.

The separation technology is based on palladium membranes, the use of which guarantees the production of very high purity hydrogen without traces of CO that could poison the catalyst of the fuel cell anode.

The water gas shift reaction increases hydrogen production, eliminating a large part of the CO generated in the auto-thermal reforming unit (1). Pure hydrogen is produced to feed the fuel cell (out of the scope of this invention), conducted by a hydrogen outlet pipe (19).

Using a mixing element located inside the boiler (3), oxygen is added to the exhaust gases of the second unit (2), mainly composed of water vapor and CO₂ with unrecovered hydrogen, CO and methane. In the boiler unit (3), combustion or oxidation of hydrogen, CO and methane takes place. These reactions are exothermic, so that, in order to prevent the temperature inside the boiler unit (3) from rising higher than expected, a certain quantity of water is added, in a controlled manner from the water separating vessel (6) by means of a pump (13), and mixed with the process fluid prior entering the boiler (3) in a mixer (9). In addition, a further water stream (12) is introduced to temper the high temperatures after the combustion process is completed, inside the boiler (3), thereby obtaining a lower outlet temperature of the unit.

Prior to evacuating the exhaust gases from the boiler unit (3) at high pressure, exhaust gases pass through a heat exchanger (7) to transfer part of their energy to the initial mixture of alcohol and water reactants. This heat exchange allows improving the energy efficiency of the process.

A further heat exchanger (14) cools enough the exhaust gases to condense all contained water and recover it in the water separator tank (6), thus separating it from the CO₂. The condensed water will be reused in the process, being pumped to the different mixing points. It is necessary to introduce a small amount of water, controlled by level measurement in the vessel (6), to balance the water, so that the unit includes a high pressure water supply (15). The exhaust gases may be sent outside by an outlet pipe (16) to dissolve them with sea water by means of the exhaust gas dissolution unit.

The method operates at a pressure up to 40 barg. For this reason, the method takes advantage of this pressure to directly evacuate the exhaust gases to the sea for dissolution. This means that it is not necessary to compress the exhaust gases when the boat is at diving depth, reducing the auto-consumption, size, weight, noise and vibration generation.

There are differences between the present invention and the document EP2641866A1, which are discussed below.

In EP2641866A1, the operating pressure is practically atmospheric, much less than the operating pressure of the present invention (about 40 barg). As a result, the rejection gases should be compressed from practically atmospheric pressure up to 30 or 40 barg (300 or 400 m depth, according to the submarine's operational diving depth). This high energy consumption makes this option unattractive in a submarine.

In EP2641866A1, the gases obtained from the reforming process are conditioned by a set of reactors arranged in series (WGS, COPROX, Methanation) which reduce the CO content to limits acceptable by the fuel cell. There is therefore a set of gas purification steps. The produced hydrogen is sent to the open anode Fuel Cell along with other compounds. The present invention comprises only one reactor and the product obtained from the reactor may be supplied to a separation process containing palladium membranes. From this separation step a pure hydrogen stream at low pressure is obtained which feeds directly to the closed anode fuel cell.

In EP2641866A1, an open anode configuration is operated by integrating the fuel cell into the process. In the present invention a closed anode Fuel Cell is used. The stack is segregated from the process, which has many dynamic, control and safety advantages.

In EP2641866A1, the heat supplied to the reformer is obtained from the combustion of the anode rejection gases by heat exchange in microreactors. The reformer is an isothermal microchannel reactor. In the present invention, the heat required by the reforming process is supplied in the same reactor by an auto-reforming process. This implies that some of the alcohol supplied is burned to supply the heat required by the reforming reactions in the reactor itself. It is an adiabatic fixed bed reactor. In the present invention, no complex heat integration with reaction kinetics or very different reaction rates on both sides are required.

EP2641866A1 discloses a system with a large number of stages, several heat exchangers, many reactors in series, a difficult heat integration system and a complex control. The present invention is based on a simpler auto-reforming process with three main steps and the control of the all integrated system is simpler.

EP2641866A1 discloses a laboratory-sized system (photographs are shown) with microreactors and cartridges. The present invention refers to a system of higher processing capacity, suitable for the energy requirements of the submarine, which greatly simplifies the process with respect to the use of several of the equipments of EP2641866A1 working in parallel or scaling them.

EP2641866A1 discloses a pre-reforming unit, which preferably produces methane, followed by a reforming unit to process said methane. In the present invention, a single auto-thermal reactor is carried out in a single step, trying to reduce direct methane formation and providing direct hydrogen production.

The electrical consumption of EP2641866A1 is high, mainly because of the necessity of a CO₂ recirculation blower to control the temperature of the combustor. 15 kW are indicated in EP2641866A1. The present invention has lower electrical consumption, about 3 kW, an important premise for a submarine.

There are differences between the present invention and the document EP2525146, which are discussed below.

EP2525146 discloses a heat generation system (boiler) which replaces a prior flame combustion based system. The heat produced is supplied to the methanol reformer. The present invention contemplates a system and an alcohol reforming process for generating hydrogen. The purpose and goal are very different.

In EP2525146, hydrogen is produced in a first step and then burned in later steps. In the present invention, hydrogen is produced to be supplied to a fuel cell, not to be burned and to generate heat.

In EP2525146, a small amount of alcohol is processed to be burned and to provide heat to the main reforming process, which takes place in another equipment (methanol reformer). In the present invention, the processing flow is higher, since most of the required hydrogen is produced in a single reactor.

EP2525146 discloses a process for methanol reforming, which takes place in a reactor, the heat required is generated by a boiler. In the present invention, the reforming reactor is of adiabatic type, in which the heat required by the reforming process is supplied directly in the same equipment by the partial oxidation of the alcohol in an auto-reforming process. The process of the present invention is simpler than that described in EP2525146.

EP2525146 discloses a process of catalytic combustion steps and dosages of oxygen arranged in series, where at least two steps must be arranged. The control to keep the system in a stable manner is complex, since disturbances produced in one step affect the later steps arranged in series, which can cause abrupt changes in temperature. This system is part of a methanol reformer process where a complex unit as the multi-stage boiler described shall be integrated. In the present invention refers to a single catalytic reactor, connected in series with a hydrogen separation process that integrates palladium membranes with WGS reaction, maximizing hydrogen generation. This solution simplifies the process and its control. The purpose of the boiler of the present invention is to burn the rejected gases of the membrane in a single step and to take advantage of the heat obtained to vaporize the alcohol/water reaction mixture. The present invention does not supply heat for the reforming process.

There are differences between the present invention and the document US2007122667A1, which are discussed below.

In US2007122667A1 the reactive mixture can combust with flame before reaching the catalyst of the auto-thermal reactor, a risky situation due to the high temperatures reached and the production of unwanted products. This scenario requires that the time the fuel-oxygen mixture is flowing before reaching the catalyst must be greater than the auto-ignition delay time. The auto-ignition delay time depends mainly on the temperature, the fuel nature, and to a lesser extent (but not less important) on the concentration of fuel and oxidizer and the pressure. In US2007122667A1 the mixture of water and fuel is vaporized. This could imply elevated temperatures, depending on the operating pressure, which is not indicated on US2007122667A1. The vaporized water/fuel is mixed with the oxygen, separated from the air, in a duct. Then it is introduced through this duct into the auto-thermal reactor. The problem of self-ignition with flame before reaching the catalyst is not resolved in the patent. Under typical auto-thermal conditions the auto-ignition delay time takes only few seconds, depending on the fuel, even less than a second. The way to make the mixture of the fuel with oxygen and how the mixture is introduced to the catalyst are very important aspects to be able to operate this type of reactors. In the present invention a detailed design method is proposed to solve these problems.

In US2007122667A1 the auto-thermal reactor is adiabatic. Adiabatic auto-thermal fixed bed reactors have a high temperature peak in the first centimeters of catalytic bed, since the chemical kinetics of the oxidation reactions of the fuel are much faster than those of reforming. This causes a quick rise in temperature. This heat is then used to reform the fuel in the presence of water, then temperature along the bed is gradually reduced. This temperature peak can cause auto-ignition of the reaction mixture before reaching the catalyst by radiation heat transfer. It also limits the operational range in terms of flow rates, since at a lower processing rate it is easier to transmit high temperatures to the reactive mixture by radiation before reaching the catalytic bed. Solutions to these problems are not proposed in the document. In the present invention a detailed design method is proposed to solve this problem. As a result of this temperature peak, the selection of materials of construction to built the reactor is complex. Wall thickness can be high, resulting in excessive equipment weight, a key aspect for a submarine. Another possible solution is to include refractory insulation inside the reactor, but this requires a larger diameter size, making it inconsistent with space restrictions in submarines. The system of US2007122667A1 does not solve the problem. In the present invention a detailed design method is proposed to solve it.

In US2007122667A1, as a result of the reforming of fuel, a certain amount of methane is obtained at the outlet of the reformer. Methane is a refractory compound to be catalytically burned in the downstream combustor, what implies the use of high operating temperatures. No tempering systems or methods suitable for controlling the temperature in the combustor are described in US2007122667A1. In the present invention a detailed design method is proposed to solve these problems, as well as the use of special alloys.

US2007122667A1 does not disclose methods of starting or activating the catalysts. In the case of ethanol, a temperature between 250 and 300 °C is required in order to start the auto-thermal catalytic process. In the present invention a specific detailed method is proposed to solve this problem.
US2007122667A1 discloses an optional method for eliminating sulfur contained in fuels such as diesel. The present invention utilizes sulfur-free fuel such as methanol or ethanol of a certain quality.

US2007122667A1 discloses a water spray tempering step performed before WGS step. This is advantageous to favour the equilibrium of the WGS reaction but it makes difficult to separate the hydrogen because partial pressure is reduced in the subsequent purification step. It is more advisable and efficient to cool by heat exchange without water mixing prior to the WGS step, as done in the present invention.

There are differences between the present invention and the document EP1808327A1, which are discussed below.

The system described in EP1808327A1 works at low pressure. This results in low pressurized exhaust gases. In advance, this condition is not a priori compatible with the requirements of a submarine. Rejection gases from the reforming process shall be removed and dissolved in seawater at any pressure, whatever the immersion level is. These rejection gases should be compressed from practically atmospheric pressure up to 30 or 40 barg (300 or 400 m depth, according to the submarine's operational diving depth). This high energy consumption makes this option unattractive in a submarine. EP1808327A1 appears to be designed for another type of vehicle.

The system of EP1808327A1 operates at low pressure and consequently the driving force for hydrogen separation is very low. Even with vacuum on the other side, the required membrane area will be very high, resulting in a more expensive and larger equipment due to the amount of Pd to be used.

As indicated before, the auto-thermal reactors work with high temperature peak at the beginning of the catalytic bed. EP1808327A1 indicates temperatures of 700 ° C at the outlet of the reactor. This implies a peak of at least 850 °C which increases reactor wall thickness causing an excessive weight of the equipment, key aspect for a submarine. Another possible solution is to include refractory insulation inside the reactor, but this generates a large reactor size complicating the fulfilling of the requirements for submarine space. The system of EP1808327A1 does not solve this problem. In the present invention a detailed design method is proposed to solve this problem.

In EP1808327A1, pure hydrogen must be evacuated from the outlet of the Pd membrane to the stack by means of a hydrogen compressor. The energy consumption needed in compressing the hydrogen makes this system unattractive for the use inside a submarine. In the present invention, said compressor is not necessary, saving a lot of compression energy.

There are differences between the present invention and the document WO2011148066A2, which are discussed below.

The higher pressure used in WO2011148066A2 implies higher thermodynamic difficulty in reforming the fuel, requiring higher operating temperatures.

In WO2011148066A2, the water is supplied independently from a vessel working with water in equilibrium with its vapor. This complicates the control as well as the thermal integration. There is also a small exhausting tower with water, that also adds complexity to the process.

With respect to the auto-ignition delay time, in WO2011148066A2 the water is vaporized at the saturation temperature corresponding to the operating pressure (about 250/280 °C) and then it is mixed with the vaporized fuel at about 240/300 °C. Oxygen is introduced just before entering the catalyst, which largely solves the problem, minimizing the time on stream where the fuel is mixed with the oxidizer with respect to the auto-ignition delay time, which in these conditions is only seconds, or in the case of Diesel is even less than a second. However the method of preparation of the mixture is not disclosed, what is an equally important aspect. Oxygen is introduced between 250 and 280 °C, what could suppose a problem. When mixing with the pure oxygen, there are areas that have higher concentration of oxygen until a homogeneous mixture is formed. As the oxygen is introduced in warm conditions, the auto-ignition delay time in these high concentration zones of oxygen is actually low, possibly producing flame before reaching the catalyst. Operating at high pressure (preferably between 50 and 60 bar as indicated) makes even easier to combust the mixture with flame. In the present invention the oxygen is introduced at a low temperature (between 5°C and 15°C), therefore the mixture, although having areas of high oxygen concentration until homogeneously mixed, maintains self-ignition delay times controlled. In the present invention a detailed design method is proposed to solve this problem.

The auto-thermal reactor of WO2011148066A2 operates with a high temperature peak in the first centimeters of catalytic bed as indicated above. This temperature peak can cause auto-ignition of the mixture before reaching the catalyst by radiation heat transfer. The document does not propose solutions to this problem. In the present invention a detailed design method is proposed to solve this problem.

Because of this temperature peak, the selection of constructions materials to build the reactor is a difficult issue. According to WO2011148066A2 an output temperature of about 780/880 °C is obtained, resulting in a probable peak of more than 1000 °C. In addition, the design pressure of this vessel, due to the high pressure operation, is very high. Very high temperatures and very high pressures result in large wall thickness, meaning an excessive weight of the equipment, a key aspect for a submarine. In this case, it is necessary to use refractory insulation inside the reactor. However, this enlarges the reactor size, making the restrictions for submarine space difficult to met. WO2011148066A2 does not disclose a solution to these problems. In the present invention a detailed design method is proposed to solve this problem.

In WO2011148066A2, as a result of the reforming of fuel, a certain amount of methane is obtained at the outlet of the reformer. Methane is a refractory compound to be catalytically burned. This implies high operating temperatures. In WO2011148066A2, operating temperatures of 400 to 700 °C are indicated. These temperatures seem low to be able to burn the methane effectively. No tempering systems or methods suitable for controlling the temperature in the combustor are described in WO2011148066A2. In the present invention a detailed design method is proposed to solve these problems.

In WO2011148066A2, the type of Pd membrane to be used is not indicated. However the high operating pressure makes it difficult to find suitable membranes to work with. Studying the state of the art in Pd membranes, it is observed that the normal operating pressure range is lower.

WO2011148066A2 does not describe any method of starting or activating the catalysts. No external heat source is identified to start and vaporize the water. In the case of ethanol, a temperature between 250 and 300 ° C is required in order to start the auto-thermal process. In the present invention a detailed design method is proposed to solve this problem.

There are differences between the present invention and the document WO0125140A1, which are discussed below.

The system described in WO0125140A1 is complex, oriented to treat sulfur-containing fuels, such as diesel. The present invention uses Sulphur free fuel such as methanol or ethanol of a certain quality, therefore no method is contemplated to remove Sulphur.

WO0125140A1 further includes in the process a scrubber with sea water, which gas outlet is fed back to the process with a compressor. This compression consumption results in significant energy inefficiency in a submarine. The present invention does not require this additional compressor.

In WO0125140A1, the same problems as mentioned above are contemplated, with the particularity that the steam is introduced at 600 °C and the fuel at 300 °C. At such high temperatures the mixture with oxygen will ignite very quickly (much less than one second, especially for diesel), probably before reaching the catalytic bed. The present invention uses lower temperatures reducing the auto-ignition risk.

In WO0125140A1, the outlet temperature is 970°C, the reactor peak is greater than 1000°C. The problems listed above are even worse because of the higher temperature. In the present invention temperatures are lower.

There are differences between the present invention and the document US 2004/0175665, which are discussed below.

In US2004/0175665, the problem that may occur is that the reactive mixture rises by swirling toward the top of the mixing chamber (62), outside of the tubes (24), since this space must be occupied by the gas. In this part of the chamber, if the temperature is sufficiently high, there is enough time to ignite the mixture, since it is a dead volume. Disposing dead volumes and designs that allow back-mixing in transients could cause a problem. The present invention does not allow the entering of fuel gas to the oxygen side, as this is introduced at a higher pressure. The venturi of the present invention causes the flows of both combustible gas and oxygen always to flow into the throat to be mixed, as it is a zone of lower pressure. Anti-return valves are also provided in the oxidant supply and the design does not include areas with dead volumes.

US2004/0175665 does not describe methods to absorb radiated energy from the catalytic bed. This energy increases the temperature of the reactants, especially in the dead volumes, favouring the ignition and flame combustion in those zones. The present invention provides a distributor plate and inert filler material before reaching the catalyst. These materials absorb the radiation produced in the catalyst and avoids overheating the mixture before reaching the catalyst.

US2004/0175665 discloses a complex system to be manufactured and operated because of the large number of distributor tubes. The present invention presents a simple system, easy to manufacture it.

There are differences between the present invention and the document US 2005/0066577 A1, which are discussed below.

In US2005/0066577 A1, the oxidizer and fuel are introduced at 371 °C as minimum. The mixture must be correctly made since introducing hot oxygen implies that in areas where the oxygen concentration is very high (before it is completely mixed) the auto ignition delay time is very low (less of one second). In the present invention the oxygen is introduced relatively cool (between 5°C and 10°C) and mixed with the fuel and water vapour at about 300°C, so the risk of auto-ignition until the mixture is homogeneous is minimum. This allows the auto-ignition delay time to be several seconds, so different loads can be considered instead of fixed 100% flow rate operation, without the risk of igniting the mixture upstream reaching the catalyst.

The mixers referred to in US2005/0066577 A1 are not of the Venturi type as in the present invention, thereby different solutions are included in both proposals.

In US2005/0066577 A1, inert material is included prior to reach the catalyst to prevent the propagation of the radiation from the catalytic zone. The present invention provides a perforated distributor plate, avoiding radiation transmission more effectively, since it creates an additional flat surface which collects almost all the remaining radiation.

In US2005/0066577 A1, the temperatures reached in the process (part of the catalyst) can be very high (982°C), therefore, having a design with downward flow in a single step, it will be mandatory to use internal refractory material (Insulation) to avoid such high temperature in the metal wall that supports the pressure. In the present invention, a downward flow through an inner tube and subsequent upward flow in an outer ring is foreseen. The gas in the outer ring is at 600°C approximately (oxidation takes place in the inner tube at 750/950°C) which makes possible not to use interior refractory material. This is a significant advantage since refractory insulation materials have a relatively high thermal conductivity, implying higher thickness and thus resulting in larger equipment. Reducing the temperature of the metal wall that resists the pressure allows using metal alloys directly in contact with the fluid and the installation of more efficient external insulating materials (with lower thermal conductivity). This leads to equipment with smaller total diameter. For a critical space requirement, such as the interior of a submarine, it is important to minimize the size of the equipment, then the double-pass arrangement of the gas in the present invention is a clear advantage in this field of application.

There are differences between the present invention and the document US3871838, which are discussed below.

The arrangement disclosed in US3871838 may cause part of the fuel to enter the oxidizing gas distributor and accumulates in the dead zone of longitudinal extension, especially in transients. As a result, auto-ignition and flame combustion can take place in this dead zone. The present invention does not allow fuel gas to enter into the oxygen side, as this is introduced at a higher pressure. The Venturi of the present invention drives the flow rate of both combustible gas and oxygen into the throat to be mixed, as it is a zone of lower pressure. Non return valves are also included in the oxidant supply and dead zones are not included in the design. The oxidant is also introduced at a relatively low temperature with the advantages indicated above.

US3871838 also has an additional air inlet and a spark generator to ignite the initial mixture and maintain a controlled combustion at the start up, heating the catalyst to working conditions. Spark ignition methods are very complex to control at high pressures and flames reduce their size under pressure. US3871838 does not mention operating pressure, but a flame ignition and control system for this initial heating presents many problems at an operating pressure of about 40 barg, as is the case of the present invention.

US3871838 proposes a complex system to manufacture and operate because of the large number of dispensing tubes. The present invention represents a simple system, easy to manufacture it.

There are differences between the present invention and the document US4865820, which are discussed below.

The operating pressure in US4865820 is lower than the one considered in the present invention (about 27 barg versus 40 barg). This involves using a rejection gas compressor to pump the fluid to the diving depth, producing a moderate energy consumption. The present invention does not require this compressor, improving energy efficiency, an important aspect in a submarine.

In US4865820 the inlet temperature of the gases is also higher (about 550°C versus 300°C in the present invention). At these temperatures (both fuel and oxidizer are introduced at this temperature) the auto-ignition delay time is lower than one second, so gas speeds shall be higher than the present invention, resulting in higher pressure load losses (pressure drop).

In US4865820, passages which introduce, through holes, the gas from one zone to the other, have a dead volume below the last mixing hole. This arrangement may cause part of the fuel to enter the oxidizing gas distributor, especially in transients, getting accumulated in dead space zone of longitudinal extension. It is therefore possible to have auto-ignition and flame combustion in the distributor. The present invention solves these problems.

US4865820 uses a single down flow pass through the reactor. In turn, an inner refractory material is coating the reactor to avoid high temperatures in the metal. In the present invention, a downward flow through an inner tube and subsequent upward flow in an outer ring is foreseen as described above. Lower temperatures in the enclosure mean that it is not necessary to use interior refractory material. This is a significant advantage in the occupied volume as indicated in the analysis of the others patents.

There are differences between the present invention and the document WO2006/065766A2, which are discussed below.

In WO2006/065766A2, there may be retro-blending of all gases in the different zones according to this arrangement in transients. In addition, a cone is arranged in the inner tube having a large dead volume. This arrangement may cause some of the fuel to enter to the gas distributor containing oxygen or vice versa and accumulate in the dead zone of the cone. It is therefore possible to produce a self-ignition and flame combustion. This problem is solved in the present invention.

In WO2006/065766A2, the operating pressure is lower than the used in the present invention (about 21 barg versus 40 barg), requiring a compressor to be able to evacuate the exhaust gases in a submarine, consuming a precious energy.

In WO2006/065766A2, higher gas velocity rates of about 300 ft/s (91 m/s) at some points are reached compared to those handled in the present invention. This causes higher pressure drop in the distributor than the one of the present invention.

There are differences between the present invention and the document WO2011148068A2, which are discussed below.

Having two enclosures, the exterior being designed to withstand the pressure and moderate-low temperature and the interior for low differential pressure and high temperature has the same purpose both in WO2011148068A2 and in the present invention, which is to reduce the thickness and consequently the weight of the outer casing. However, in the present invention, the two enclosures are communicated, first the fluid crosses the inner shell and then the exterior one, with a U-shaped flow pattern. The pressure difference which has to withstand the inner shell, which sees high temperature, is just the pressure drop of the fluid between the two enclosures. In WO2011148068A2, the space between the two shells is occupied by an inert gas. A very accurate and fast pressure control of the space between envelopes is required to match it as close as possible to the pressure inside the reactor. In the event of pressure changes or transient fluctuations in the reactor (start up, etc.), the pressure control of the inert gas in the space between enclosures could not act quick enough, and important pressure differences, both positive and negative, could be created. These pressure differences have a very negative impact on the mechanical strength of the inner shell which is further subjected to high temperatures. There is a risk of breaking the inner shell. In the present invention, this situation cannot occur because both envelopes are physically communicated.

The outer shell in WO2011148068A2 does not contain a catalyst and is occupied by an inert gas. A larger size than in the present invention is expected since it is a non catalytic space. This space acts as insulation. In the present invention the space is better utilized by communicating the two envelopes and by passing reactive fluid in contact with the catalyst through the outer envelope.

In WO2011148068A2, the reactor is cooled, with refrigeration water, by tubes arranged outside the reaction envelope. This causes a marked radial temperature profile. This is not an adiabatic reactor. In addition, having catalyst in the form of monoliths makes the radial mixing even more difficult and the radial temperature profile is more pronounced. The reactor of the present invention is fully adiabatic, eliminating accentuated radial temperature gradients. These lower temperatures at the sides favour not complete conversion of the fuel and methanation (methane generation, reducing the selectivity towards hydrogen).

In WO2011148068A2, there may be retro-mixing of the gases in the different zones according to this provision in transients. Basically, the chamber where oxygen is introduced to the venturi elements, has large dead volumes in which the water-hydrocarbon mixture can enter and be trapped. In addition, oxygen is being introduced at 250 ° C to 300 ° C (regarding the 5-15 ° C of the present invention), drastically shortening the auto-ignition delay time.

WO2011148068A2 discloses a chamber for mixing and atomizing the fuel. In the present invention the fuel and steam are already mixed and vaporized, therefore this part of the design is simpler.

In WO2011148068A2, a multitude of venturi type mixing elements for fuel and oxidizer (between 300 and 2000 per square meter) are included. This design minimizes contact time regarding a single venturi, as is the case of the present invention. The design of WO2011148068A2 is thought to have very small auto-ignition delay times, mainly due to operating at higher pressures, higher temperatures and especially to operate with diesel (the diesel fuel has a low auto-ignition delay time, associated with a high cetane number, however, ethanol has a lower cetane number or a much higher auto-ignition delay time, much more gasoline-like). The type of fuel, the lower operating pressures and the lower operating temperatures make the auto-ignition delay time much higher in the present invention, being able to use a single Venturi system, which greatly simplifies the design and facilitates the manufacturing.

There are differences between the present invention and the document WO2015198186A1, which are discussed below.

Operating pressure in WO2015198186A1 is lower than the one of the present invention (about 4 barg versus 40 barg). It is indicated that water is vaporized at 150 °C and this implies a maximum pressure of 4 barg. The application is probably a land industrial type, not oriented to the submarine industry, since the described design requires using a rejection gas compressor to bring the fluid to the diving depth, requiring a moderate energy consumption. The present invention does not require this compressor, improving energy efficiency, an important aspect in a submarine.

In WO2015198186A1, the inlet temperature of the gases is also higher (about 450 ° C, with the unit started, against 300 ° C in the present invention). At these temperatures (both fuel and oxidizer are introduced at this temperature) the auto-ignition delay time is lower. A combustion and fuel mixer as indicated in WO2015198186A1 should not be of the static mixer type, which, while providing well mixing, generates too many vortices and increases residence time of the fluid, before reaching the catalyst, against the auto-ignition delay time.

WO2015198186A1 uses a single downward gas flow pattern along the reactor. In turn, inner refractory materials to avoid high temperatures in the metal wall coat the reactor. In the present invention, a downward flow through an inner tube and further upward flow through an outer ring is utilized, as described above. Lower temperatures in the outer enclosure mean that it is not necessary to use inner refractory material. This is a significant advantage in the volume occupied as indicated in the analysis of above patents.

There are differences between the present invention and the document US2008011250A1, which are discussed below.

In US2008011250A1 discloses a first chamber for mixing, atomizing and vaporizing the liquid fuel with steam. The present invention does not have such a chamber, since the fuel and steam are already vaporized and pre-mixed. It results in a simpler design of the reforming reactor than US2008011250A1.

In US2008011250A1, the temperature of the vapour mixture from the first chamber is about 400 °C, greater than 300 °C of the present invention. This assumes that the mixing process with the oxidizing agent is more critical in order to avoid possible auto-ignition.

In US2008011250A1, neither gas velocity nor angles in the second mixing chamber are indicated nor anything to prevent the formation of possible swirls. The divergent nozzle angle as well as throat speeds and where to locate the catalyst are important parameters. In the present invention flow velocities are indicated in the throat to ensure a good mixing, likewise, it is suggested to calculate the angle according to the flow to avoid the formation of eddies or swirls near the wall and the properly location of the catalyst is disclosed.

There are differences between the present invention and the documents US20020088179A1 and US6620389B1, which are discussed below.

A high number of dosing tubes distributed throughout the reactor section are disclosed in US20020088179A1 and US6620389B1. This is a complex manufacturing system. The patent system is probably intended to work with reforming diesel-type hydrocarbons having a low auto-ignition delay time. In the present invention, there is a single distributor in the form of Venturi, making the manufacture of the equipment easier.

In US20020088179A1 and US6620389B1, the oxidant dosing chamber has significant dead volumes. This arrangement may cause part of the fuel to enter the oxidizing gas distributor, especially in transient operations, and to accumulate in the dead space zone of longitudinal extension. It is therefore possible for auto-ignition and flame combustion to occur in the distributor. The present invention solves these problems.

In US20020088179A1 and US6620389B1, a single downstream gas passageway throughout the reactor is disclosed. It is a non-adiabatic reactor, since there is a heat exchange with the helical tubes that vaporize the reactants. There are therefore radial temperature profiles along the catalytic bed. These lower temperatures at the sides favour not complete conversion of fuel and methanation (methane generation, reducing the selectivity towards hydrogen). In the present invention an adiabatic reactor is used which temperature profile favours the complete conversion of the alcohol and minimizes the formation of methane.

### BRIEF DESCRIPTION OF DRAWINGS

Figure 1 shows the general procedure for alcohol reforming and hydrogen production in a submarine.
Figure 2 shows an auto-thermal reforming unit (1) embodiment.
Figure 3 shows an auto-thermal reforming unit (1) embodiment.
Figure 4 shows an auto-thermal reforming unit (1) embodiment.
Figure 5 shows a boiler unit (3) embodiment.
Figure 6 shows a boiler unit (3) embodiment.
Figure 7 shows a boiler unit (3) embodiment.
Figure 8 shows a system comprising Water Gas Shift units (2) and separation units comprising palladium membranes.
Figure 9 shows a CFD simulation of the oxygen concentration profile in the Venturi mixer of the auto-thermal reforming unit (1).
Figure 10 shows a CFD simulation of the velocity profile in the Venturi mixer of the auto-thermal reforming unit (1). Visualization is limited to a maximum of 10 m/s (higher values will be represented in the same grey color) in order to see with certain precision the low velocity behavior.
Figure 11 shows a CFD simulation of the temperature profile in the Venturi mixer of the auto-thermal reforming unit (1).
Figure 12 shows the temperature profile along the catalyst bed in U pattern (the first part represents the downflow inside the inner envelope and the second part is the upwards flow in the concentric region between the inner envelope and the outer wall) of the auto-thermal reforming unit (1).

### DESCRIPTION OF EMBODIMENTS

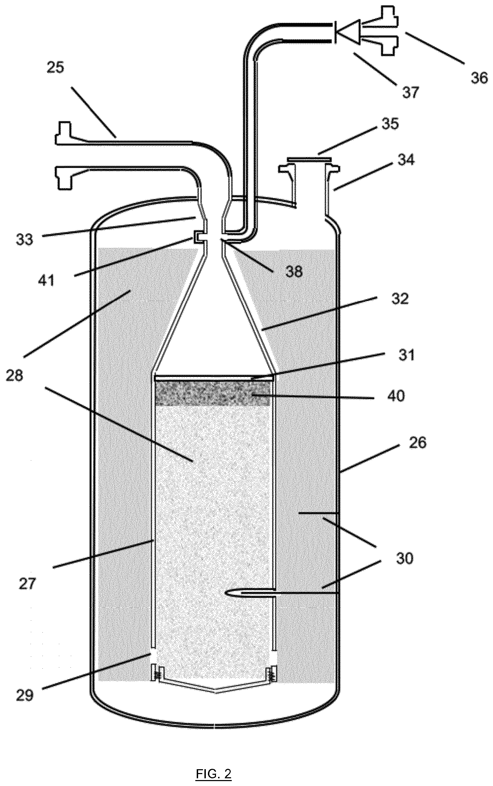

### Alcohol reforming and hydrogen production system in a submarine containing an auto-thermal reforming unit (1), depicted in Figure 2.

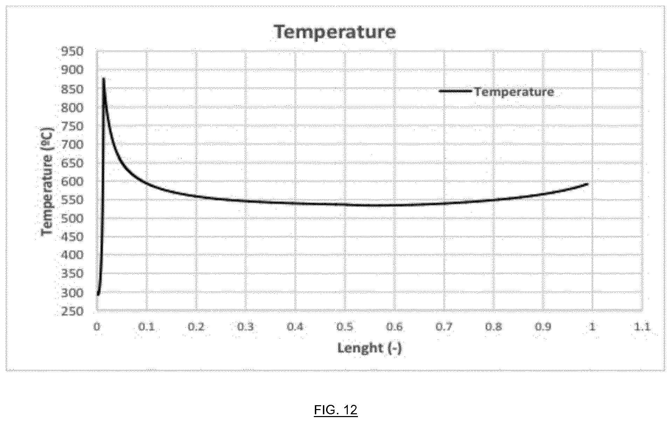

(1a1) The auto-thermal reforming unit (1) is a single auto-thermal adiabatic fixed-bed reactor designed as a cylindrical envelope or tube (27) disposed in a vertical arrangement with an outer shell (26) that withstands the internal pressure. The gas flow is arranged first through the inner cylinder envelope (27) going downwards. In the bottom part of the inner envelope (27) there are holes (29) which allow the passage of the fluid into the annular space created between the outer shell (26) and the inner envelope (27). In this annular space the fluid has an upward flow pattern. Finally, the gas mixture leaves the reactor at the top (34). Said outer shell (26) would be constructed of a special nickel alloy (N06617 / N06625 grade 2 / N08811 or similar) suitable for working in a high pressure range (40 barg) and high temperature (550-750°C for ethanol). The high peak temperature produced by the partial oxidation/combustion reactions of the alcohol (very fast kinetic reactions) takes place in the area of the inner cylinder (27), to decrease gradually as the reforming reaction progresses in the catalytic bed. As the fluid passes into the annular space through the bottom zone of (27), the temperature decreases as result of steam reforming reactions getting close to 550°C/750°C. In this way, the high temperature peak that takes place at the beginning of the catalytic bed (from 750 to 950°C) is prevented from coming into contact with the outer shell (26) which withstands the pressure. A typical temperature profile along the catalytic bed can be observed in Figure 12. This flow arrangement allows the reduction of the wall thickness of the vessel and not to use interior refractory lining. The use of interior refractory insulation entails a considerable diameter increase a priori incompatible with the space requirements of a submarine. The fact of arranging the flow in this way also increases the gas velocity; mass transfer problems (external diffusion) in the outer boundary layer of the catalyst particles are minimized while the contact time between fuel and oxidizer before contact with the catalyst, once the mixture is made, is reduced;
(1a2) a catalyst (28) located inside the inner envelope (27) and inside the annular space;
(1a3) an inlet of alcohol and steam located at the top part (25) being made at about 300/350°C;
(1a4) a Venturi type mixing element (33) where the alcohol / steam mixture accelerates and increases its velocity and turbulence level, throat velocity can be around 20-40 m/s for maximum processing capacity;
(1a5) an oxygen inlet (36) at higher pressure than the process, at 5°C to 15°C approximately. The amount of oxygen dosed is controlled by the temperature measured in the catalytic bed (28) and in the outlet of the auto-thermal reforming unit (1). The oxygen is dosed into the throat of the Venturi by a distributor ring (41) with holes (38) without dead volumes. At this area a great turbulence is generated due to the high gas velocity that ensures the rapid mixing between reagents. The passage of combustible gas to the oxygen side is not allowed, as this is introduced at higher pressure. The Venturi (33) always makes that both fuel gas and oxygen always flow to the throat to mix, as this is a lower pressure zone. In addition, an anti-return valve (37) is provided at the oxygen inlet to prevent back flow.

The Venturi throat smoothly increases the diameter (divergent nozzle) (32) up to the diameter of the inner envelope (27) so that the enlargement is gradual to avoid swirling near the wall, the angle must be calculated depending on the flow load to avoid such swirls;

This mixer design provides a good blending, dead volumes and eddies are avoided, and the operating conditions (pressure and temperature) guarantee a self-ignition delay time of few seconds. In addition the oxygen mixture is made as close as possible to the catalyst. Therefore, with this design, any problem related with flame combustion produced by the auto-ignition of the mixture before reaching the catalyst is minimized;
(1a6) a perforated distributor plate (31) which allows the gas flow down but does not allow back-flushing of the ceramic (40) or catalyst (28) particles upwards in a reverse flow situation. This plate absorbs radiation from the lower zone. The plate (31) (and the subsequent inert material (40) and catalytic bed (28)) can be positioned at half height in the Venturi divergent nozzle (32), near the oxygen inlet, to reduce the contact time, or once the enlargement of the diverging nozzle (32) has been completed, according to the self-ignition delay times;
(1a7) non porous inert ceramic material (40) whose function is none other than to improve the distribution of the reactants throughout the surface of the inner envelope (27) and to absorb the radiation produced by the elevated temperatures of the first centimeters of catalytic bed, avoiding auto-ignition of the reaction mixture before reaching the catalytic bed (28);
(1a8) temperature probes (30) protected by thermowells arranged along the reactor to monitor and control the behavior of the equipment at all times under the proper operating conditions;
(1a9) a product outlet (34) placed at the top of the reactor with a mesh (35) located in a nozzle with holes of adequate size to prevent dragging of the catalyst (28) but allowing the free flow of the fluid.

### Alcohol reforming and hydrogen production system in a submarine containing an auto-thermal reforming unit (1)

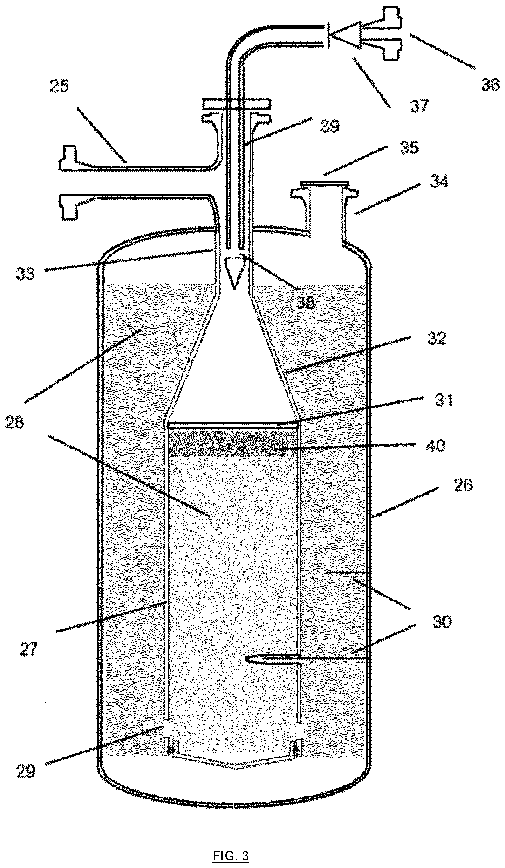

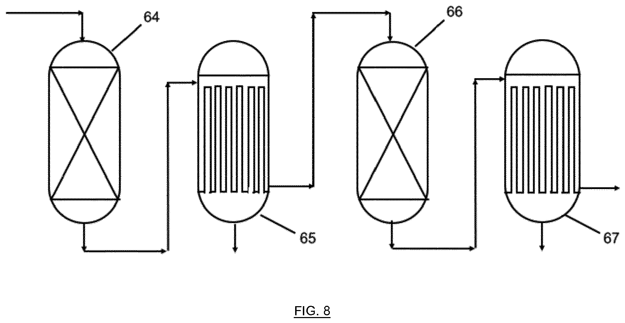

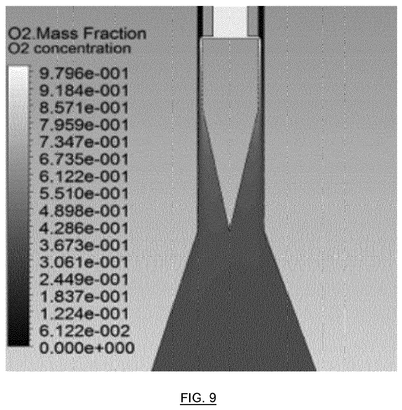

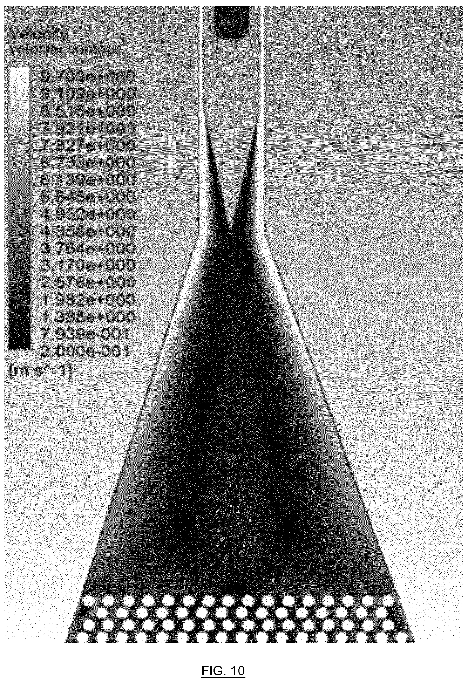

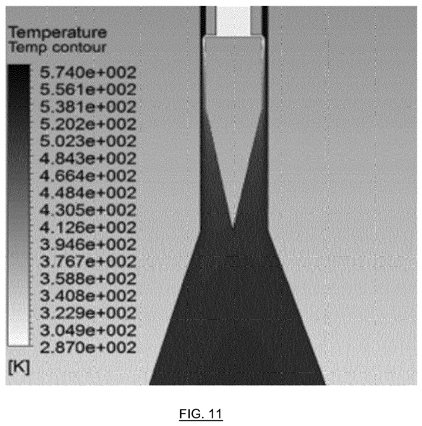

The auto-thermal reforming unit (1) described in Figure 3 comprises the elements described in the auto-thermal reforming unit (1) described in Figure 2, with the exception of the following modifications:
The oxygen dosing is done with a lance (39) (Figure 3) in which the Venturi throat itself (33) is created by the area restriction to the flow because of the introduction of the lance (39), achieving similar gas cross velocities to those mentioned above (20-40 m/s). The oxygen will be dosed by orifices (38) located in the lower part of the lance (39). This lance (39) has no dead volumes in it and can be manufactured from the mechanization of a bar. Figures 9, 10 and 11 show Computations Fluid Dynamics (CFD) simulations of the oxygen mixing, temperature profile and velocity of this mixer with lance. It is observed that a good oxygen mixture is almost immediate, as well as the homogenization of temperature. When reaching the bed of ceramic inert (40) the velocity is equalized (Figure 8), maintaining a homogeneous velocity profile throughout the diameter.

### Alcohol reforming and hydrogen production system in a submarine containing an auto-thermal reforming unit (1)

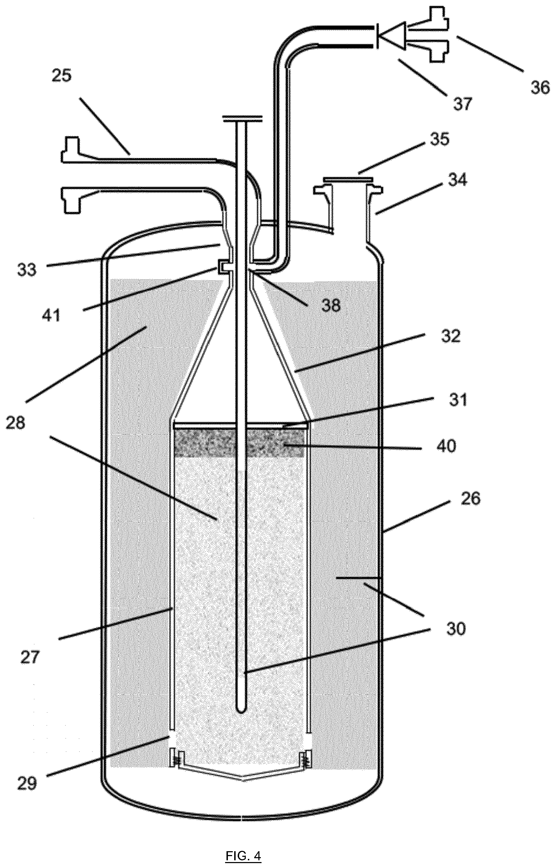

The auto-thermal reforming unit (1) described in Figure 4 comprises the elements described in the auto-thermal reforming unit (1) described in Figure 2, with the exception of the following modifications:
The temperature probes (30) used to measure the inner temperature inside the envelope (27) are replaced by a thermowell arranged in vertical position. It allows the use of multi-point temperature sensors distributed along the thermowell, allowing a more easy to construct embodiment.

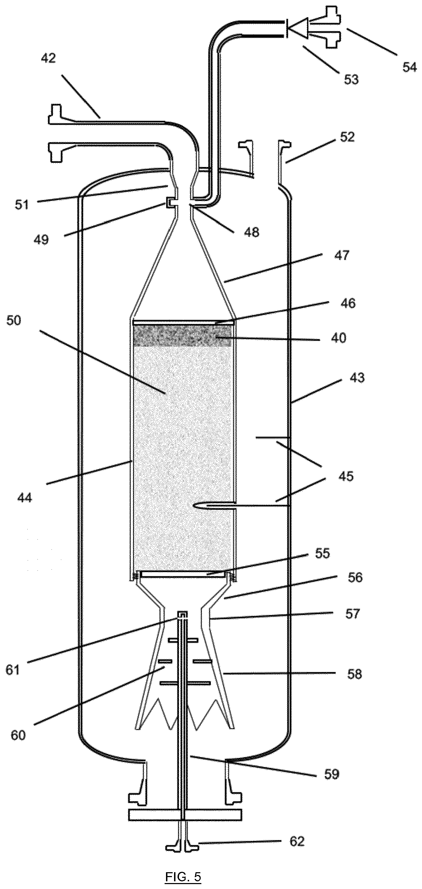

### Alcohol reforming and hydrogen production system in a submarine containing a boiler unit (3), depicted in figure 5.

(1b1) The boiler unit (3) consists on a single adiabatic fixed bed reactor designed as a cylindrical envelope or tube (44) disposed in a vertical arrangement with an outer shell (43) that withstands the internal pressure. The gas flow is arranged first through the inner cylindrical envelope (44) going downwards, passing through a series of elements described below. Thereafter the flow is conducted to the annular space created between the outer shell (43) and the inner envelope (44). In this annular space the fluid has an upward flow pattern. Finally, the gas mixture leaves the reactor at the top (52). Said envelope (43) would be constructed of a special nickel alloy (N06617 / N06625 / N08811 or similar) suitable for working in a high pressure range (40 barg) and high temperature (600°C). Methane is a refractory compound to be catalytically burned, therefore to activate its combustion it is required to increase the temperature up to 400/450°C. This increase in temperature is achieved due to the combustion of H₂ and CO, which have faster chemical kinetics and lower catalytic burning temperatures. As the fluid flows through the catalytic bed, the methane is burnt so the maximum final temperature reaches about 800 / 900 °C, being measured inside the inner envelope (44) and controlled by manipulating the amount of water injection (13) upstream of the boiler (3);
(1b2) a catalyst (50) located exclusively within the inner envelope (44);
(1b3) a combustible compounds inlet located at the top (42), working at about 200 °C;
(1b4) a first Venturi type mixing element (51) where the combustible reactant mixture is accelerated and its velocity and turbulence level increases, the velocity in the throat can be around 20-40 m/s;
(1b5) an oxygen inlet (54) at higher pressure than the process, at 5°C to 15°C. The amount of oxygen dosed is such that a slight excess thereof is obtained in the exhaust gases to ensure complete combustion of the reactants. The oxygen composition is measured at the outlet of the boiler (3). Oxygen is dosed into the throat of the first Venturi (51) by a distributor ring (49) with holes (48) without dead volumes. At this area a great turbulence is generated due to the high gas velocity that ensures the rapid mixing between reagents. The passage of combustible gas to the oxygen side is not allowed, as it is introduced at higher pressure. The first Venturi (51) always causes that both combustible gas and oxygen always flow to the throat to mix, as it is a zone of lower pressure. In addition, a non-return valve (53) is provided at the oxygen inlet to prevent back flow.

The throat of the first Venturi (51) smoothly increases the diameter (divergent nozzle) (47) up to the diameter of the inner envelope (44) so that the enlargement is gradual to prevent the formation of eddies near the wall, the angle must be calculated depending on the load to avoid such swirls.

This mixer design provides a good blending, dead volumes and eddies are avoided, and operating conditions (pressure and temperature) guarantees enough auto-ignition delay time. In addition the oxygen mixture is made as close as possible to the catalyst. Therefore, with this design, any problems related with flame combustion produced by the auto-ignition of the mixture before reaching the catalyst is minimized;
(1b6) a perforated distributor plate, handling of two-phase flow (46) which allows gas flow down but does not allow back-flushing of the ceramic (40) or the catalyst (50) particles upwards in a reverse flow situation. This plate absorbs radiation from the lower zone. The plate (46) (and the subsequent inert material (40) and catalytic bed (50)) can be positioned very near the Venturi throat to reduce the contact time or once the enlargement of the diverging nozzle (47) has been completed, according to the self-ignition delay times (in this case very related with hydrogen content);
(1b7) non porous inert ceramic material (40) whose function is none other than to improve the distribution of the reactants throughout the radial surface of the inner envelope (44) and to absorb the radiation produced by the elevated temperatures of the first centimeters of catalytic bed, avoiding auto-ignition of the reactive mixture before reaching the catalytic bed (50);
(1b8) temperature probes (45) protected by thermowells arranged along the reactor to monitor and control the behavior of the equipment at all times under the proper operating conditions;
(1b9) a catalyst bed retainer (55), being a perforated plate with holes of a size suitable for not letting the catalyst particles (50) pass, but the gas fluid could freely flow;
(1b10) once the gases have been burned at 800/900 °C in the inner envelope (44), a second Venturi element (56) is provided. In the throat (57) of said element, additional water is introduced by means of a water lance (59), to temper the gaseous mixture.

The outlet of the second Venturi (56) discharges to the lower part of the outer shell (43), passing in the divergent nozzle (58) by a series of deflector plates (60) which act as a static mixer. The aim of the second Venturi (56) and the static mixer (plates) (60) is to ensure a turbulence such that the water introduced for tempering totally vaporizes and reduces the temperature of the gas mixture to around 600 °C.
The mixture at 600 °C has an upward flow pattern through the annular space between the inner envelope (44) and the outer shell (43). This design allows a moderate operating temperature of the outer shell (43), which withstands the pressure. This flow arrangement allows to reduce the wall thickness of the vessel and not to use interior refractory lining, which could lead to a considerable increase in diameter, a priori incompatible with the space requirements of a submarine
(1b11) a water inlet (62) with an injection located in the throat of the second Venturi by means of a water lance (59). The water injection is performed through holes (61) by the pump (12) and its flow is controlled by the temperature measured in the concentric annular space;
(1b12) a product outlet (52) located at the top part of the system.

### Alcohol reforming and hydrogen production system in a submarine containing a boiler unit (3)

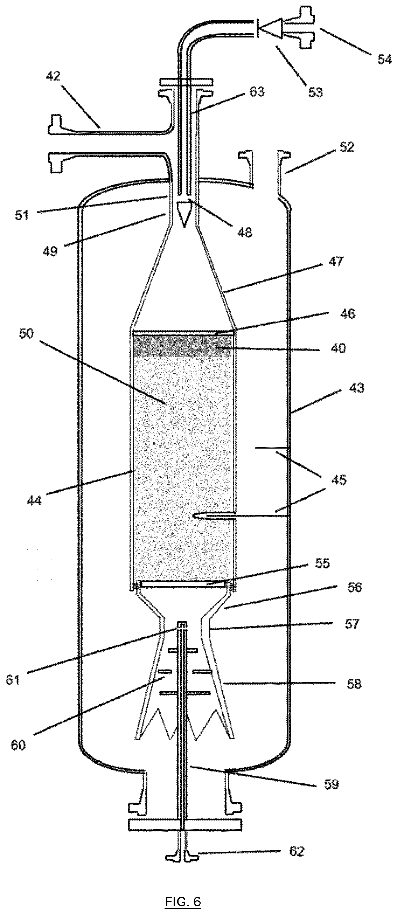

The boiler unit (3) described in Figure 6 comprises the elements described in the boiler unit (3) described in Figure 5, with the exception of the following modifications:
The oxygen dosing is done with a lance (63) (Figure 6) in which the Venturi (51) throat itself is created by the area restriction to the flow because of the introduction of the lance (63), achieving similar gas passage velocities to those mentioned above (20-40 m/s). The oxygen will be dosed by orifices (48) located in the lower part of the lance (63). This lance (63) has no dead volumes in it and can be manufactured from the mechanization of a bar.

### Alcohol reforming and hydrogen production system in a submarine containing a boiler unit (3)

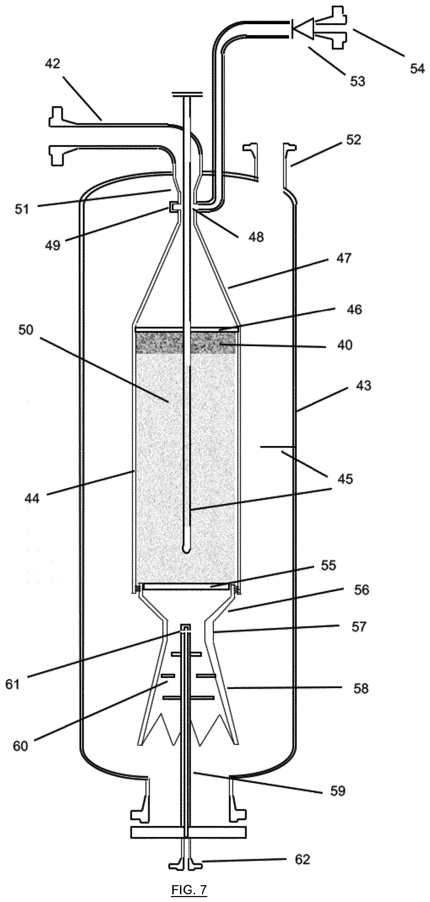

The boiler unit (3) described in Figure 7 comprises the elements described in the boiler unit (3) described in Figure 5, with the exception of the following modifications:
The temperature probes (45) used to measure the inner temperature inside the envelope (44) are replaced by a thermowell arranged in vertical position. It allows the use of multi-point temperature sensors distributed along the thermowell, allowing a more easy to construct embodiment.

## Claims

1. A system for alcohol reforming and hydrogen production suitable for a submarine, comprising (a) an alcohol auto-thermal reforming unit (1) for alcohol auto-thermal reforming and hydrogen production, and (b) a boiler unit for combustion of hydrogen and combustible gases, **characterized in that**
- the auto-thermal reforming unit (1) is an adiabatic fixed bed reactor arranged in a cylindrical envelope (27) surrounded by an outer shell (26) of metal alloy, the reactor comprising a catalytic bed (28), an alcohol and steam inlet (25), an oxygen inlet (36), a non return valve (37) arranged in the oxygen inlet (36), a divergent nozzle (32) with increasing size up to the diameter of the cylindrical envelope (27), wherein the auto-thermal reforming unit (1) comprises a Venturi type mixing element (33) and a distributor ring (41) which doses the oxygen in the Venturi type mixing element (33) or a lance (39) creating a Venturi throat (33) and
- the boiler unit (3) is an adiabatic fixed bed reactor arranged in a cylindrical envelope (44) surrounded by an outer shell (43) of metal alloy, the reactor comprising a catalytic bed (50), a hydrogen and combustible gases inlet (42), an oxygen inlet (54), a first divergent nozzle (47) with increasing size up to the diameter of the cylindrical envelope (44), wherein the boiler unit (3) comprises a first Venturi type mixing element (51) and a distributor ring (49) which doses the oxygen in the first Venturi type mixing element (51) or a lance (63) which creates a Venturi throat (51), a second Venturi element (56), a second divergent nozzle (58), a water inlet (62) and a water injection lance (59),
and comprising palladium membranes, wherein the palladium membranes are integrated in the auto-thermal reforming unit (1) or positioned between the auto-thermal reforming unit (1) and the boiler unit (3) .

2. The system according to claim 1, **characterized in that** the metal alloy is a nickel alloy.

3. The system according to claim 1 or 2, **characterized in that** the alcohol is methanol or ethanol.

4. The system according to any one of claims 1 to 3, **characterized in that** the combustible gases are methane and/or CO.

5. An auto-thermal reforming unit (1) for alcohol reforming and hydrogen production suitable for a submarine, **characterized in that** the unit is an adiabatic fixed bed reactor arranged in a cylindrical envelope (27) surrounded by an outer shell (26) of metal alloy, the reactor comprising a catalytic bed (28), an alcohol and steam inlet (25), an oxygen inlet (36), a non return valve (37) arranged in the oxygen inlet (36), a divergent nozzle (32) with increasing size up to the diameter of the cylindrical envelope (27), wherein the auto-thermal reforming unit (1) comprises a Venturi type mixing element (33) and a distributor ring (41) which doses the oxygen in the Venturi type mixing element (33) or a lance (39) creating a Venturi throat (33).

6. The auto-thermal reforming unit (1) according to claim 5, **characterized in that** the unit comprises a drilled distributor plate (31) and a ceramic material (40).

7. The auto-thermal reforming unit (1) according to claim 5 or 6, **characterized in that** the unit comprises a product outlet (34) and a mesh (35).

8. The auto-thermal reforming unit (1) according to any one of claims 5 to 7, **characterized by** comprising palladium membranes.

9. A boiler unit (3) for alcohol reforming and hydrogen production suitable for a submarine, **characterized in that** the unit is an adiabatic fixed bed reactor arranged in a cylindrical envelope (44) surrounded by an outer shell (43) of metal alloy, the reactor comprising a catalytic bed (50), a hydrogen and combustible gases inlet (42), an oxygen inlet (54), a first divergent nozzle (47) with increasing size up to the diameter of the cylindrical envelope (44), wherein the boiler unit (3) comprises a first Venturi type mixing element (51) and a distributor ring (49) which doses the oxygen in the first Venturi type mixing element (51) or a lance (63) which creates a Venturi throat (51), a second Venturi element (56), a second divergent nozzle (58), a water inlet (62) and a water injection lance (59).

10. The boiler unit (3) according to claim 9, **characterized in that** the unit comprises a drilled distributor plate (46) and a ceramic material (40).

11. The boiler unit (3) according to claim 9 or 10, **characterized in that** the unit comprises a product outlet.

12. The boiler unit (3) according to any one of claims 9 to 11, **characterized in that** the unit comprises deflector plates (60) arranged inside the second divergent nozzle (58).

13. The boiler unit (3) according to any one of claims 9 to 12, **characterized in that** the unit comprises a non-return valve (53) arranged in the oxygen inlet (54).

14. A method for alcohol reforming and hydrogen production in a submarine, **characterized by** comprising an alcohol reforming and hydrogen production step in a system according to any one of the claims 1 to 4, wherein the pressure at the auto-thermal reforming unit (1) is from 30 to 40 barg and wherein the following steps are carried out in the auto-thermal reforming unit (1):
(a) alcohol is introduced through an alcohol and steam inlet (25) at a temperature from 300°C to 350°C and
(b) oxygen is introduced through an oxygen inlet (36) at a temperature of 5 to 15°C.

15. The method according to claim 14, **characterized in that** the following steps are carried out in the boiler unit (3):
(c) hydrogen and combustible gases are introduced through a hydrogen and combustible gases inlet (42) at a temperature of 180 to 220°C and
(d) oxygen is introduced through an oxygen inlet (54) at a temperature of 5 to 15°C.

## Patentansprüche

1. System zum Umformen von Alkohol und zur Wasserstoffherstellung, geeignet für ein Unterseeboot, umfassend (a) eine autothermische Alkoholreformierungseinheit (1) zum autothermischen Umformen von Alkohol und zur Wasserstoffherstellung und (b) eine Kesseleinheit zur Verbrennung von Wasserstoff und brennbaren Gasen, **dadurch gekennzeichnet, dass**
- die autothermische Reformierungseinheit (1) ein adiabatischer Festbettreaktor ist, der in einer von einer Außenhülle (26) aus einer Metalllegierung umgebenen zylindrischen Hülle (27) angeordnet ist, wobei der Reaktor ein katalytisches Bett (28), einen Alkohol- und Dampfeinlass (25), einen Sauerstoffeinlass (36), ein in dem Sauerstoffeinlass (36) angeordnetes Rückschlagventil (37) und eine divergierende Düse (32) mit zunehmender Größe bis zum Durchmesser der zylindrischen Hülle (27) umfasst, wobei die autothermische Reformierungseinheit (1) ein Venturi-Mischelement (33) und einen Verteilerring (41), der den Sauerstoff in dem Venturi-Mischelement (33) dosiert, oder eine Lanze (39), die eine Venturi-Verengung (33) bildet, umfasst, und
- die Kesseleinheit (3) ein adiabatischer Festbettreaktor ist, der in einer von einer Außenhülle (43) aus einer Metalllegierung umgebenen zylindrischen Hülle (44) angeordnet ist, wobei der Reaktor ein katalytisches Bett (50), einen Einlass für Wasserstoff und brennbare Gase (42), einen Sauerstoffeinlass (54) und eine erste divergierende Düse (47) mit zunehmender Größe bis zum Durchmesser der zylindrischen Hülle (44) umfasst, wobei die Kesseleinheit (3) ein erstes Venturi-Mischelement (51) und einen Verteilerring (49), der den Sauerstoff in dem ersten Venturi-Mischelement (51) dosiert, oder eine Lanze (63), die eine Venturi-Verengung (51) bildet, sowie ein zweites Venturi-Element (56), eine zweite divergierende Düse (58), einen Wassereinlass (62) und eine Wassereinspritzlanze (59) umfasst,
und Palladiummembranen umfasst, wobei die Palladiummembranen in die autothermische Reformierungseinheit (1) integriert oder zwischen der autothermischen Reformierungseinheit (1) und der Kesseleinheit (3) angeordnet sind.

2. System nach Anspruch 1, **dadurch gekennzeichnet, dass** die Metalllegierung eine Nickellegierung ist.

3. System nach Anspruch 1 oder 2, **dadurch gekennzeichnet, dass** der Alkohol Methanol oder Ethanol ist.

4. System nach einem der Ansprüche 1 bis 3, **dadurch gekennzeichnet, dass** die brennbaren Gase Methan und/oder CO sind.

5. Autothermische Reformierungseinheit (1) zum Umformen von Alkohol und zur Wasserstoffherstellung, geeignet für ein Unterseeboot, **dadurch gekennzeichnet, dass** die Einheit ein adiabatischer Festbettreaktor ist, der in einer von einer Außenhülle (26) aus einer Metalllegierung umgebenen zylindrischen Hülle (27) angeordnet ist, wobei der Reaktor ein katalytisches Bett (28), einen Alkohol- und Dampfeinlass (25), einen Sauerstoffeinlass (36), ein in dem Sauerstoffeinlass (36) angeordnetes Rückschlagventil (37) und eine divergierende Düse (32) mit zunehmender Größe bis zum Durchmesser der zylindrischen Hülle (27) umfasst, wobei die autothermische Reformierungseinheit (1) ein Venturi-Mischelement (33) und einen Verteilerring (41), der den Sauerstoff in dem Venturi-Mischelement (33) dosiert, oder eine Lanze (39), die eine Venturi-Verengung (33) bildet, umfasst.

6. Autothermische Reformierungseinheit (1) nach Anspruch 5, **dadurch gekennzeichnet, dass** die Einheit aus einer durchbohrten Verteilerplatte (31) und einem Keramikmaterial (40) besteht.

7. Autothermische Reformierungseinheit (1) nach Anspruch 5 oder 6, **dadurch gekennzeichnet, dass** die Einheit einen Produktauslass (34) und ein Maschengewebe (35) umfasst.

8. Autothermische Reformierungseinheit (1) nach einem der Ansprüche 5 bis 7, **dadurch gekennzeichnet, dass** sie Palladiummembranen umfasst.

9. Kesseleinheit (3) zum Umformen von Alkohol und zur Wasserstoffherstellung, geeignet für ein Unterseeboot, **dadurch gekennzeichnet, dass** die Einheit ein adiabatischer Festbettreaktor ist, der in einer von einer Außenhülle (43) aus einer Metalllegierung umgebenen zylindrischen Hülle (44) angeordnet ist, wobei der Reaktor ein katalytisches Bett (50), einen Einlass für Wasserstoff und brennbare Gase (42), einen Sauerstoffeinlass (54) und eine erste divergierende Düse (47) mit zunehmender Größe bis zum Durchmesser der zylindrischen Hülle (44) umfasst, wobei die Kesseleinheit (3) ein erstes Venturi-Mischelement (51) und einen Verteilerring (49), der den Sauerstoff in dem ersten Venturi-Mischelement (51) dosiert, oder eine Lanze (63), die eine Venturi-Verengung (51) bildet, sowie ein zweites Venturi-Element (56), eine zweite divergierende Düse (58), einen Wassereinlass (62) und eine Wassereinspritzlanze (59) umfasst.

10. Kesseleinheit (3) nach Anspruch 9, **dadurch gekennzeichnet, dass** die Einheit aus einer durchbohrten Verteilerplatte (46) und einem Keramikmaterial (40) besteht.

11. Kesseleinheit (3) nach Anspruch 9 oder 10, **dadurch gekennzeichnet, dass** die Einheit einen Produktauslass umfasst.

12. Kesseleinheit (3) nach einem der Ansprüche 9 bis 11, **dadurch gekennzeichnet, dass** die Einheit innerhalb der zweiten divergierenden Düse (58) angeordnete Ablenkplatten (60) umfasst.

13. Kesseleinheit (3) nach einem der Ansprüche 9 bis 12, **dadurch gekennzeichnet, dass** die Einheit ein im Sauerstoffeinlass (54) angeordnetes Rückschlagventil (53) umfasst.

14. Verfahren zum Umformen von Alkohol und zur Wasserstoffherstellung in einem Unterseeboot, **dadurch gekennzeichnet, dass** es einen Schritt zum Umformen von Alkohol und zur Wasserstoffherstellung in einem System nach einem der Ansprüche 1 bis 4 umfasst, wobei der Druck in der autothermischen Reformierungseinheit (1) 30 bis 40 barg beträgt und in der autothermischen Reformierungseinheit (1) die folgenden Schritte erfolgen:
(a) durch einen Alkohol- und Dampfeinlass (25) wird Alkohol mit einer Temperatur von 300°C bis 350°C eingeleitet und
(b) durch einen Sauerstoffeinlass (36) wird Sauerstoff mit einer Temperatur von 5 bis 15°C eingeleitet.

15. Verfahren nach Anspruch 14, **dadurch gekennzeichnet, dass** in der Kesseleinheit (3) die folgenden Schritte erfolgen:
(c) durch einen Einlass (42) für Wasserstoff und brennbare Gase werden Wasserstoff und brennbare Gase mit einer Temperatur von 180 bis 220°C eingeleitet und
(d) durch einen Sauerstoffeinlass (54) wird Sauerstoff mit einer Temperatur von 5 bis 15°C eingeleitet.

## Revendications

1. Système de reformage d'alcools et de production d'hydrogène adaptée à un sous-marin, comprenant (a) une unité de reformage auto-thermique d'alcools (1) pour le reformage auto-thermique d'alcools et la production d'hydrogène, et (b) une unité de chaudière pour la combustion d'hydrogène et de gaz combustibles, **caractérisé en ce que**
- l'unité de reformage auto-thermique (1) est un réacteur à lit fixe adiabatique disposé dans une enveloppe cylindrique (27) entourée d'une enveloppe extérieure (26) en alliage métallique, le réacteur comprenant un lit catalytique (28), une entrée d'alcool et de vapeur (25), une entrée d'oxygène (36), un clapet anti-retour (37) disposé dans l'entrée d'oxygène (36), une buse divergente (32) dont la taille augmente jusqu'au diamètre de l'enveloppe cylindrique (27), dans laquelle l'unité de reformage autothermique (1) comprend un élément mélangeur de type Venturi (33) et un anneau distributeur (41) qui dose l'oxygène dans l'élément mélangeur de type Venturi (33) ou une lance (39) créant une gorge de Venturi (33) et
- l'unité de chaudière (3) est un réacteur à lit fixe adiabatique disposé dans une enveloppe cylindrique (44) entourée d'une enveloppe extérieure (43) en alliage métallique, le réacteur comprenant un lit catalytique (50), une entrée d'hydrogène et de gaz combustibles (42), une entrée d'oxygène (54), une première buse divergente (47) dont la taille augmente jusqu'au diamètre de l'enveloppe cylindrique (44), dans laquelle l'unité de chaudière (3) comprend un premier élément mélangeur de type Venturi (51) et un anneau distributeur (49) qui dose l'oxygène dans le premier élément mélangeur de type Venturi (51) ou une lance (63) qui crée une gorge de Venturi (51), un deuxième élément de Venturi (56), une deuxième buse divergente (58), une entrée d'eau (62) et une lance d'injection d'eau (59),
et comprenant des membranes de palladium, dans lequel les membranes de palladium sont intégrées dans l'unité de reformage auto-thermique (1) ou positionnées entre l'unité de reformage auto-thermique (1) et l'unité de chaudière (3).

2. Système selon la revendication 1, **caractérisé en ce que** l'alliage métallique est un alliage de nickel.

3. Système selon la revendication 1 ou 2, **caractérisé en ce que** l'alcool est du méthanol ou de l'éthanol.

4. Système selon l'une quelconque des revendications 1 à 3, **caractérisé en ce que** les gaz combustibles sont du méthane et/ou du CO.

5. Unité de reformage auto-thermique (1) pour le reformage d'alcools et la production d'hydrogène adaptée à un sous-marin, **caractérisée en ce que** l'unité est un réacteur à lit fixe adiabatique disposé dans une enveloppe cylindrique (27) entourée par une enveloppe extérieure (26) en alliage métallique, le réacteur comprenant un lit catalytique (28), une entrée d'alcool et de vapeur (25), une entrée d'oxygène (36), un clapet anti-retour (37) disposé dans l'entrée d'oxygène (36), une buse divergente (32) dont la taille augmente jusqu'au diamètre de l'enveloppe cylindrique (27), dans lequel l'unité de reformage auto-thermique (1) comprend un élément mélangeur de type Venturi (33) et un anneau distributeur (41) qui dose l'oxygène dans l'élément mélangeur de type Venturi (33) ou une lance (39) créant une gorge de Venturi (33).

6. Unité de reformage auto-thermique (1) selon la revendication 5, **caractérisée en ce que** l'unité comprend une plaque de distribution percée (31) et un matériau céramique (40).

7. Unité de reformage auto-thermique (1) selon la revendication 5 ou 6, **caractérisée en ce que** l'unité comprend une sortie de produit (34) et une grille (35).

8. Unité de reformage auto-thermique (1) selon l'une quelconque des revendications 5 à 7, **caractérisée en ce qu'**elle comprend des membranes en palladium.

9. Unité de chaudière (3) pour le reformage d'alcools et la production d'hydrogène adaptée à un sous-marin, **caractérisée en ce que** l'unité est un réacteur à lit fixe adiabatique disposé dans une enveloppe cylindrique (44) entourée d'une enveloppe extérieure (43) en alliage métallique, le réacteur comprenant un lit catalytique (50), une entrée d'hydrogène et de gaz combustibles (42), une entrée d'oxygène (54), une première buse divergente (47) dont la taille augmente jusqu'au diamètre de l'enveloppe cylindrique (44), dans laquelle l'unité de chaudière (3) comprend un premier élément mélangeur de type Venturi (51) et un anneau distributeur (49) qui dose l'oxygène dans le premier élément mélangeur de type Venturi (51) ou une lance (63) qui crée une gorge de Venturi (51), un deuxième élément de Venturi (56), une deuxième buse divergente (58), une entrée d'eau (62) et une lance d'injection d'eau (59).

10. Unité de chaudière (3) selon la revendication 9, **caractérisée en ce que** l'unité comprend une plaque de distribution percée (46) et un matériau céramique (40).

11. Unité de chaudière (3) selon la revendication 9 ou 10, **caractérisée en ce que** l'unité comprend une sortie de produit.

12. Unité de chaudière (3) selon l'une quelconque des revendications 9 à 11, **caractérisée en ce que** l'unité comprend des plaques déflectrices (60) disposées à l'intérieur de la deuxième buse divergente (58).

13. Unité de chaudière (3) selon l'une quelconque des revendications 9 à 12, **caractérisée en ce que** l'unité comprend un clapet anti-retour (53) disposé dans l'entrée d'oxygène (54).

14. Procédé de reformage d'alcools et de production d'hydrogène dans un sous-marin, **caractérisé en ce qu'**il comprend une étape de reformage d'alcools et de production d'hydrogène dans un système selon l'une quelconque des revendications 1 à 4, dans lequel la pression à l'unité de reformage auto-thermique (1) est de 30 à 40 bar et dans lequel les étapes suivantes sont effectuées dans l'unité de reformage autothermique (1) :
(a) l'alcool est introduit par une entrée d'alcool et de vapeur (25) à une température comprise entre 300°C et 350°C et
(b) l'oxygène est introduit par une entrée d'oxygène (36) à une température de 5 à 15°C.

15. Procédé selon la revendication 14, **caractérisée en ce que** les étapes suivantes sont effectuées dans l'unité de chaudière (3) :
(c) l'hydrogène et les gaz combustibles sont introduits par une entrée d'hydrogène et de gaz combustibles (42) à une température de 180 à 220°C et
(d) l'oxygène est introduit par une entrée d'oxygène (54) à une température de 5 à 15°C.
